# EUROPEAN PATENT APPLICATION

(11) **EP 4 779 991 A1**
(43) Date of publication of application: **22.07.2026**
(21) Application number: 24870569.1
(22) Date of filing: 19.09.2024
(51) Int. Cl.: H04N 21/41, G06F 3/14

(54) **SCREEN PROJECTION SYSTEM, METHOD, APPARATUS, STORAGE MEDIUM, AND COMPUTER PROGRAM PRODUCT**

(30) Priority: 28.09.2023 CN 202311287387
(71) Applicant: HUAWEI TECHNOLOGIES CO., LTD., Shenzhen 518129 (CN)
(72) Inventor: WANG, Wei, Shenzhen, Guangdong 518129 (CN); LIN, Junru, Shenzhen, Guangdong 518129 (CN); WANG, Mingqi, Shenzhen, Guangdong 518129 (CN); ZHENG, Kai, Shenzhen, Guangdong 518129 (CN); WANG, Kang, Shenzhen, Guangdong 518129 (CN)
(74) Representative: Grünecker Patent- und Rechtsanwälte PartG mbB
(86) International application number: PCT/CN2024/119785
(87) International publication number: WO 2025/067025

(57) **Abstract**

This application discloses a projection system, method, and apparatus, a storage medium, and a computer program product, and belongs to the field of computer technologies. The method includes: A source device sends a UI structure and UI attribute data of a projection area to a destination device. In this way, the destination device can construct, reconstruct, render, and display a corresponding projection area based on the UI structure and the UI attribute data at a UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

## Description

This application claims priority to Chinese Patent Application No. 202311287387.9, filed on September 28, 2023 and entitled "PROJECTION SYSTEM, METHOD, AND APPARATUS, STORAGE MEDIUM, AND COMPUTER PROGRAM PRODUCT", which is incorporated herein by reference in its entirety.

### TECHNICAL FIELD

This application relates to the field of computer technologies, and in particular, to a projection method and apparatus, a storage medium, and a computer program product.

### BACKGROUND

Currently, projection technologies such as wireless projection, multi-screen collaboration, and continuation have been widely applied to people's life and work. For example, a mobile terminal such as a mobile phone or a tablet computer may be used as a source device, and the source device can project or migrate screen content onto a destination device such as a computer, a television, or a projector, to perform viewing or a user operation on a larger screen.

There are mainly two manners for implementing the projection technology in a related technology. A first manner is a screen mirroring manner, and a second manner is a continuation manner, where the continuation is also referred to as migration or transfer. In the screen mirroring manner, after generating screen images through rendering, a source device encodes the screen images by frame to form a video stream. The source device sends the video stream to a destination device. After decoding the video stream, the destination device can display the screen images, so that the screen images of the source device are projected onto the destination device. In the continuation manner, a same application program needs to be installed on the source device and the destination device. In a process of running the application program, the source device exports related data of the application program, and sends the data to the destination device. After receiving the data sent by the source end, the destination device starts the same application program, and runs the application program based on the received data, so that the application program is continued from the source device on the destination device for running.

However, in the screen mirroring manner, all work of the application program needs to be completed on the source device, including a rendering operation with large computation workload, and the source device further needs to perform video encoding and transmission. During high-definition projection, power consumption of encoding and decoding and video transmission is high. In addition, the rendering operation is completed on the source device, and the screen images are obtained through rendering based on a screen resolution of the source device, which cannot adapt to a screen resolution of the destination device. As a result, the screen images displayed on the destination device may not match the screen resolution of the destination device. In the continuation manner, the same application program needs to be installed on the destination device, and multi-device collaboration is not supported. In addition, the source device needs to send user-related data of the application program to the destination device, which may lead to leakage of user privacy data.

### SUMMARY

This application provides a projection system, method, and apparatus, a storage medium, and a computer program product, to adapt to a screen resolution of a destination device, improve projection effect, reduce an amount of sent data, reduce power consumption of a source device, and reduce a risk of leakage of user privacy data. The technical solutions are as follows.

According to a first aspect, a projection system is provided. The system includes a source-end projection module and a destination-end projection module. The source-end projection module is configured to send a user interface (user interface, UI) structure and UI attribute data of a first projection area to the destination-end projection module, to project the first projection area from a source device on which the source-end projection module is located onto a destination device on which the destination-end projection module is located. The UI structure indicates a layout relationship between a plurality of UI nodes in the first projection area, and the UI attribute data indicates a rendering-related attribute of each of the plurality of UI nodes. The destination-end projection module is configured to: receive the UI structure and the UI attribute data, and display the first projection area on the destination device based on the UI structure and the UI attribute data.

The destination device can construct, reconstruct, render, and display the corresponding projection area based on the UI structure and the UI attribute data at a UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

The destination-end projection module is specifically configured to: load the UI structure based on a UI framework of the destination device to arrange the plurality of UI nodes in the first display area, and set an attribute of each of the plurality of UI nodes based on the UI attribute data to reconstruct, render, and display the first projection area. That is, this solution is specifically implemented based on the UI framework of the destination device.

The source-end projection module is further configured to: according to an application instruction, construct the UI structure based on a UI framework of the source device, and generate the UI attribute data. That is, this solution depends on the UI layer under an application layer.

In a possible implementation, the destination-end projection module is further configured to send first manipulation information to the source-end projection module, to update a part or all of the UI nodes in the first projection area in a manner of reversely controlling the source device. That is, this solution supports the destination device to reversely control the source device.

The source device runs a first application, and the first projection area is a projection area of the first application.

In a possible implementation, the first application is not installed on the destination device. That is, in this solution, the same application does not need to be installed on the destination device.

In a possible implementation, the first projection area is a partial or entire area on a first page. That is, this solution supports projection of the partial area on the page.

According to a second aspect, a projection method is provided. The method is applied to a source device, and the method includes: sending a user interface UI structure and UI attribute data of a first projection area to a destination device, to project the first projection area onto the destination device. The UI structure indicates a layout relationship between a plurality of UI nodes in the first projection area, the UI attribute data indicates a rendering-related attribute of each of the plurality of UI nodes, and the UI structure and the UI attribute data are used to display the first projection area on the destination device.

In this way, the destination device can construct, reconstruct, render, and display the corresponding projection area based on the UI structure and the UI attribute data at a UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

Before sending the UI structure and the UI attribute data that are of the first projection area to the destination device, the method further includes: according to an application instruction, constructing the UI structure based on a UI framework of the source device, and generating the UI attribute data.

In a possible implementation, the plurality of UI nodes include a first UI node corresponding to a first source-end component, the first source-end component belongs to a first-type component, and a corresponding image is drawn for the first-type component based on a non-UI framework. The UI attribute data includes a drawing instruction of the first source-end component, and the drawing instruction of the first source-end component is used to draw an unrendered image of the first source-end component based on the non-UI framework; or the UI attribute data includes a rendered image of the first source-end component. It should be understood that the first-type component may be considered as a non-standard component. For example, the first-type component includes a component customized by a developer or some special components preset by a system. For the first-type component, the source device synchronizes the drawing instruction or the rendered image to the destination device.

In a possible implementation, the plurality of UI nodes include a second UI node corresponding to a second source-end component, the second source-end component belongs to a second-type component, and a corresponding image is drawn for the second-type component based on the UI framework. The UI attribute data includes drawing attribute data of the second source-end component, and the drawing attribute data of the second source-end component is used to draw a corresponding image of the second source-end component based on the UI framework. It should be understood that the second-type component may be considered as a standard component. For example, the second-type component includes some standard components preset by the system. For the second-type component, the source device synchronizes, to the destination device, the attribute data used to draw the corresponding component.

In a possible implementation, the source device runs a first application, the first projection area is a projection area of the first application, and the method further includes: sending an application resource of the first application to the destination device. The application resource includes a resource required for rendering the plurality of UI nodes, and the application resource and the UI attribute data are jointly used by the destination device to reconstruct, render, and display the first projection area. That is, the source device may further need to synchronize the application resource to the destination device. The application resource may include configuration data, a picture, text, and the like in an application package.

In a possible implementation, the method further includes: receiving first manipulation information sent by the destination device, where the first manipulation information indicates a first operation performed by a destination-end user on the first projection area; performing a second operation on the first projection area based on the first manipulation information, and updating the UI structure and/or the UI attribute data that are/is of the first projection area; and sending UI update data of the first projection area to the destination device, where the UI update data is used by the destination device to update the first projection area based on a UI framework of the destination device. That is, this solution supports the destination device to reversely control the source device.

In a possible implementation, the UI attribute data includes identifiers of the plurality of UI nodes, the first manipulation information includes an identifier of a third UI node and a manipulation instruction corresponding to the first operation, the manipulation instruction instructs the second operation, and the third UI node is one of the plurality of UI nodes. Performing the second operation on the first projection area based on the first manipulation information includes: performing the second operation on the third UI node based on the identifier of the third UI node and the manipulation instruction. That is, in this solution, the destination device is supported to perform reverse control on some UI nodes, and the manipulation information synchronized by the destination device to the source device is the specific manipulation instruction.

In a possible implementation, the UI attribute data includes identifiers of the plurality of UI nodes, the first manipulation information includes an identifier of a fourth UI node and operation information of the first operation, and the fourth UI node is one of the plurality of UI nodes. Performing the second operation on the first projection area based on the first manipulation information includes: parsing the operation information of the first operation to determine the second operation; and performing the second operation on the fourth UI node based on the identifier of the fourth UI node. That is, in this solution, the destination device is supported to perform reverse control on some UI nodes, and the manipulation information synchronized by the destination device to the source device is the operation information of the user, and the source device needs to parse the operation information to obtain the second operation corresponding to a corresponding operation instruction.

In a possible implementation, the source device runs the first application, the first projection area is a projection area on a first page of the first application, and the method further includes: when the first application is switched from the first page to a second page, sending a UI structure and UI attribute data of a second projection area to the destination device, to project the second projection area onto the destination device. The second projection area is a projection area on the second page. That is, when the page is switched, the source device resends the UI structure and the UI attribute data of the new projection area.

In a possible implementation, the source device supports a plurality of projection modes, and the method further includes: displaying a current projection mode. The current projection mode is one of the plurality of projection modes.

In a possible implementation, the source device supports the plurality of projection modes, projection modes of different projection areas are different, and before sending the user interface UI structure and the UI attribute data that are of the first projection area to the destination device, the method further includes: determining a projection mode of the first projection area from the plurality of projection modes according to a mode adaptation algorithm. That is, this solution supports adaptive switching of the projection mode in a projection process.

According to a third aspect, a projection method is provided, applied to a destination device. The method includes: receiving a user interface UI structure and UI attribute data of a first projection area that are sent by a source device, where the UI structure indicates a layout relationship between a plurality of UI nodes in the first projection area, and the UI attribute data indicates a rendering-related attribute of each of the plurality of UI nodes; and displaying the first projection area based on the UI structure and the UI attribute data.

In this way, the destination device can construct, reconstruct, render, and display the corresponding projection area based on the UI structure and the UI attribute data at a UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

In a possible implementation, displaying the first projection area based on the UI structure and the UI attribute data includes: loading the UI structure based on a UI framework of the destination device to arrange the plurality of UI nodes in the first display area; and setting an attribute of each of the plurality of UI nodes based on the UI attribute data to reconstruct, render, and display the first projection area. That is, this solution is specifically implemented based on the UI framework of the destination device.

In a possible implementation, the plurality of UI nodes include a first UI node corresponding to a first source-end component, the first source-end component belongs to a first-type component, and a corresponding image is drawn for the first-type component based on a non-UI framework. The UI attribute data includes a drawing instruction of the first source-end component, and the drawing instruction of the first source-end component is used to draw an unrendered image of the first source-end component based on the non-UI framework; or the UI attribute data includes a rendered image of the first source-end component. It should be understood that the first-type component may be considered as a non-standard component. For example, the first-type component includes a component customized by a developer or some special components preset by a system. For the first-type component, the source device synchronizes the drawing instruction or the rendered image to the destination device.

When the UI attribute data includes the drawing instruction of the first source-end component, loading the UI structure based on the UI framework of the destination device to arrange the first UI node in the first display area includes: loading the UI structure based on the UI framework to create a first destination-end component, to obtain the first UI node. Setting the attribute of the first UI node based on the UI attribute data includes: drawing an image of the first destination-end component according to the drawing instruction of the first source-end component and the non-UI framework, to obtain an unrendered image of the first UI node.

When the UI attribute data includes the rendered image of the first source-end component, loading the UI structure based on the UI framework of the destination device to arrange the first UI node in the first display area includes: loading the UI structure based on the UI framework to create a second destination-end component, to obtain the first UI node. The second destination-end component is different from the first source-end component. Setting the attribute of the first UI node based on the UI attribute data includes: enabling, based on the rendered image of the first source-end component and by setting a UI attribute of the second destination-end component, the first UI node to carry the rendered image of the first source-end component.

In a possible implementation, the plurality of UI nodes include a second UI node corresponding to a second source-end component, the second source-end component belongs to a second-type component, a corresponding image is drawn for the second-type component based on the UI framework, and the UI attribute data includes drawing attribute data of the second source-end component. Loading the UI structure based on the UI framework of the destination device to arrange the second UI node in the first display area includes: loading the UI structure based on the UI framework to create a third destination-end component, to obtain the second UI node. The third destination-end component is the same as the second source-end component. Setting the attribute of the second UI node based on the UI attribute data includes: setting an attribute of the second source-end component based on the drawing attribute data of the second source-end component and the UI framework, to draw a corresponding image of the second UI node. It should be understood that the second-type component may be considered as a standard component. For example, the second-type component includes some standard components preset by the system. For the second-type component, the source device synchronizes, to the destination device, the attribute data used to draw the corresponding component.

In a possible implementation, the method further includes: sending first manipulation information to the source device in response to a first operation performed by a destination-end user on the first projection area, where the first manipulation information indicates the source device to perform a second operation on the first projection area, and update the UI structure and/or the UI attribute data that are/is of the first projection area; receiving UI update data of the first projection area that is sent by the source device; and updating the first projection area based on the UI update data of the first projection area. That is, this solution supports the destination device to reversely control the source device.

In a possible implementation, the source device supports a plurality of projection modes, projection modes of different projection areas are different, and the method further includes: sending real-time computing capability information of the destination device to the source device. The real-time computing capability information is used by the source device to determine a projection mode of a current projection area from the plurality of projection modes according to a mode adaptation algorithm. That is, this solution supports adaptive switching of the projection mode in a projection process.

According to a fourth aspect, a projection apparatus is provided, and the projection apparatus has a function of implementing behavior of the method in the second aspect or the third aspect. The projection apparatus includes one or more modules, and the one or more modules are configured to implement the projection method provided in the second aspect or the third aspect.

According to a fifth aspect, an electronic device is provided. The electronic device includes a processor and a memory. The memory is configured to: store a program for performing the projection method provided in the second aspect or the third aspect, and store data used for implementing the projection method provided in the second aspect or the third aspect. The processor is configured to execute the program stored in the memory. The electronic device may further include a communication bus, and the communication bus is configured to establish a connection between the processor and the memory.

According to a sixth aspect, a computer-readable storage medium is provided. The computer readable-storage medium stores instructions, and when the instructions are run on a computer, the computer is enabled to perform the projection method according to the second aspect or the third aspect.

According to a seventh aspect, a computer program product including instructions is provided. When the computer program product runs on a computer, the computer is enabled to perform the projection method according to the second aspect or the third aspect.

Technical effect obtained in the fourth aspect to the seventh aspect is similar to technical effect obtained through corresponding technical means in the first aspect to the third aspect. Details are not described herein again.

### BRIEF DESCRIPTION OF DRAWINGS

FIG. 1 is a diagram of a screen mirroring projection manner according to an embodiment of this application;
FIG. 2 is a diagram of a continuation projection manner according to an embodiment of this application;
FIG. 3 is a diagram of a system architecture related to a projection method according to an embodiment of this application;
FIG. 4 is a diagram of a software and hardware architecture of an electronic device according to an embodiment of this application;
FIG. 5 is a diagram of a structure of an electronic device according to an embodiment of this application;
FIG. 6 is a flowchart of a projection method according to an embodiment of this application;
FIG. 7 is a flowchart of another projection method according to an embodiment of this application;
FIG. 8 is a diagram of a projection manner for a non-standard component in a projection method according to an embodiment of this application;
FIG. 9 is a diagram of mode adaptation according to an embodiment of this application;
FIG. 10A and FIG. 10B are a flowchart of projection in a case in which a page is updated according to an embodiment of this application;
FIG. 11 is a flowchart of another projection method according to an embodiment of this application;
FIG. 12A and FIG. 12B are a diagram of core steps of a projection method according to an embodiment of this application;
FIG. 13 is a diagram of a projection area on a source device according to an embodiment of this application;
FIG. 14 is a diagram of projection effect on a destination device in this solution according to an embodiment of this application;
FIG. 15 is a diagram of projection effect of a mirroring mode on a destination device in a related technology according to an embodiment of this application;
FIG. 16 is a diagram of another projection area on a source device in this solution according to an embodiment of this application;
FIG. 17 is a diagram of a projection area of a destination device corresponding to FIG. 16 in this solution according to an embodiment of this application;
FIG. 18 is a diagram of a structure of a projection apparatus according to an embodiment of this application; and
FIG. 19 is a diagram of a structure of another projection apparatus according to an embodiment of this application.

### DESCRIPTION OF EMBODIMENTS

To make the objectives, technical solutions, and advantages of embodiments of this application clearer, the following further describes the implementations of this application in detail with reference to the accompanying drawings.

Currently, projection technologies such as wireless projection, multi-screen collaboration, and continuation have been widely applied to people's life and work. For example, a mobile terminal such as a mobile phone or a tablet computer may be used as a source device, and the source device can project or migrate screen content onto a destination device such as a computer, a television, or a projector, to perform viewing or a user operation on a larger screen. Certainly, a large-screen device may also be projected onto a small-screen device. For example, a video call application on the computer is continued on the mobile phone, so that a user continues to use the mobile phone to perform a video call. It should be further understood that there may be one or more source devices. For example, in a multi-channel projection scenario, a plurality of source devices may simultaneously project to a same destination device, to display, on the destination device, screen images separately corresponding to the plurality of source devices on split screens. Similarly, there may be one or more destination devices. For example, the source device may share a screen image with a plurality of destination devices, so that users of the plurality of destination devices watch the screen image corresponding to the source device.

There are mainly two manners for implementing the projection technology in a related technology. A first manner is a screen mirroring projection manner, and a second manner is a continuation projection manner, where the continuation is also referred to as migration or transfer. For ease of understanding, an execution procedure of an application program is first described. The execution procedure of the application program usually includes three steps. A first step is logic running of the application program. To be specific, an application layer of a device runs a UI component and application function logic that are developed by a developer of the application, to trigger a series of UI tasks or instructions. A second step is that the device loads a system UI framework (which may be referred to as a UI framework for short) of the device to execute the series of UI tasks or instructions, to construct or update a page of the application program. A third step is that the device renders and displays a page on a screen based on the constructed page via a graphics system of the device.

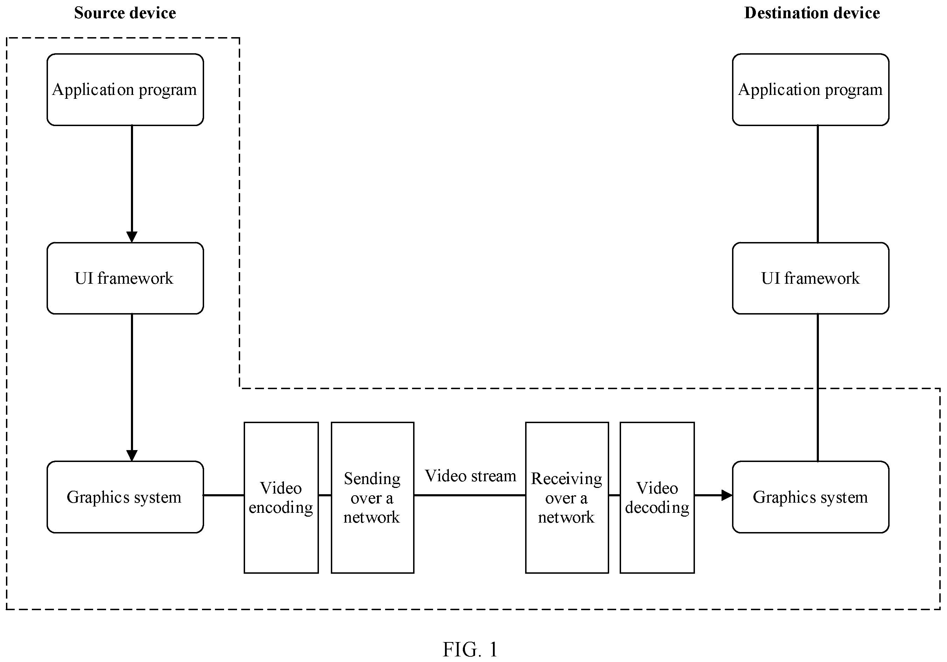

FIG. 1 is a diagram of a screen mirroring projection manner according to an embodiment of this application. Refer to FIG. 1. In the screen mirroring projection manner, after generating screen images through rendering, a source device encodes the screen images by frame to form a video stream. The source device sends the video stream to a destination device over a network. After decoding the video stream via the graphics system of the destination device, the destination device can display the screen images, so that the screen images of the source device are projected onto the destination device. However, when wireless high-definition projection or multi-channel projection is performed, power consumption of encoding and decoding performed by the source device is high. Because the video stream needs to be continuously transmitted over the network, power consumption of a wireless sending module (for example, a wireless fidelity (wireless fidelity, Wi-Fi) chip) on the source device is high. For the high-definition projection, sizes of key frames in the video stream are about 100 KB to 200 KB. A large amount of data is transmitted over the network. When network quality is poor, frame freezing may occur on the destination device. In addition, a rendering operation is completed on the source device, and the screen images are obtained through rendering based on a screen resolution of the source device, which cannot adapt to a screen resolution of the destination device. As a result, the screen images displayed on the destination device may not match the screen resolution of the destination device.

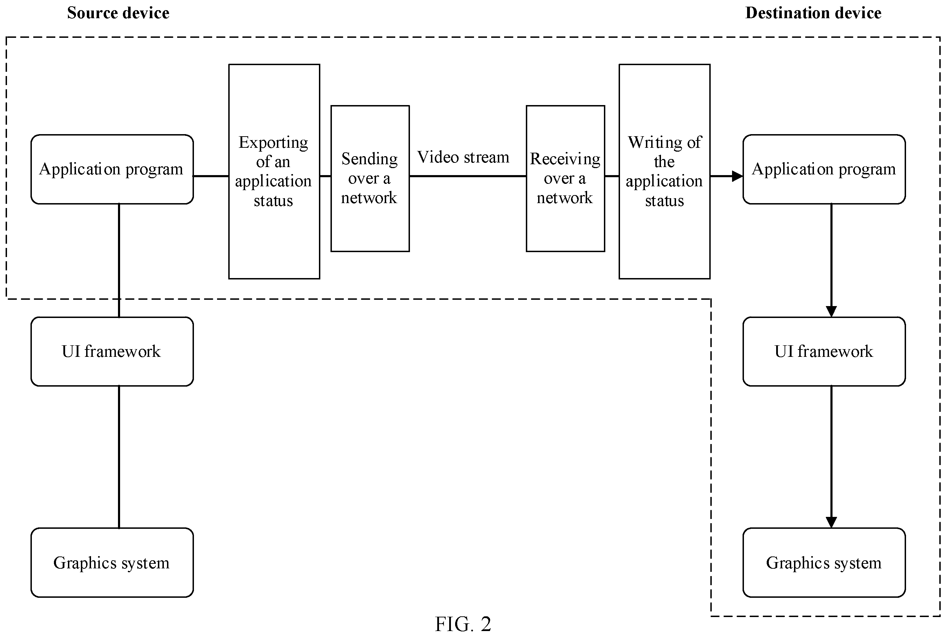

FIG. 2 is a diagram of a continuation projection manner according to an embodiment of this application. Refer to FIG. 2. In the continuation projection manner, a same application program needs to be installed on a source device and a destination device. In a process of running the application program, the source device exports related data (including application status data and the like) of the application program, and sends the data to the destination device over a network. After receiving the data sent by the source end, the destination device starts the same application program, and runs the application program based on the written application status data, so that the application program is continued from the source device on the destination device for running. However, in the continuation projection manner, the same application program needs to be installed on the destination device, and multi-device collaboration and reverse control on the source device by the destination device are not supported. In addition, the source device needs to send user-related data of the application program to the destination device, which may lead to leakage of user privacy data.

To resolve the foregoing problems in the related technology, an embodiment of this application provides a new projection method. The following describes this in detail.

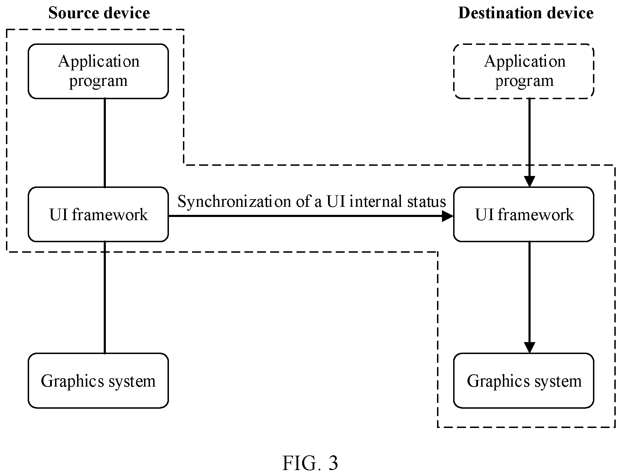

FIG. 3 is a diagram of a system architecture related to a projection method according to an embodiment of this application. Refer to FIG. 3. The system architecture includes a source device and a destination device. A wireless or wired communication connection is established between the source device and the destination device. The source device includes a source-end projection module, and the destination device includes a destination-end projection module.

The source device is configured to: run a to-be-projected application program, and send a UI data stream of the application program to the destination device based on a system UI framework of the source device, that is, synchronize UI internal status data to the destination device, including a UI structure and UI attribute data. The destination device is configured to construct, render, and display a corresponding projection area based on the received UI data stream and a UI framework of the destination device.

The application program may be a system program delivered with the source device, or may be a non-system program installed after the source device is delivered, or may be a tap-to-use program that does not need to be installed, for example, an applet or a quick app. In other words, any picture that can be presented by the source device can be projected according to this solution. In addition, the projection area may be an entire display area of the source device, or may be a partial display area of the source device. For example, the source device runs a first application, and the projection area may be a partial or entire area on a first page of the first application.

For example, the entire area on the first page of the first application is projected. During specific implementation, the source device is configured to: in a process of running the first application, after constructing the first page based on the UI framework of the source device, send a UI structure and UI attribute data of the first page to the destination device. The destination device is configured to: receive the UI structure and the UI attribute data of the first page, construct a plurality of UI nodes of the first page based on the UI structure and the UI attribute data of the first page, and the UI framework of the destination device, and render and display the first page via a graphics system of the destination device. In some cases, the source device further needs to send an application resource (including a resource required for rendering the plurality of UI nodes of the first page) of the first application to the destination device. The application resource is, for example, an icon resource or a text resource in an application package. The application resource and the UI attribute data are jointly used to set attributes of the UI nodes. In other words, the destination device is configured to load the UI structure, the UI attribute data, and the application resource based on the UI framework, to construct the first page. When the first page is an initial to-be-projected page, the destination device needs to load the UI framework. After loading the UI framework, the destination device can construct to-be-projected pages based on the UI framework of the destination device.

It should be understood that, whether the first application is installed on the destination device is not limited in this solution.

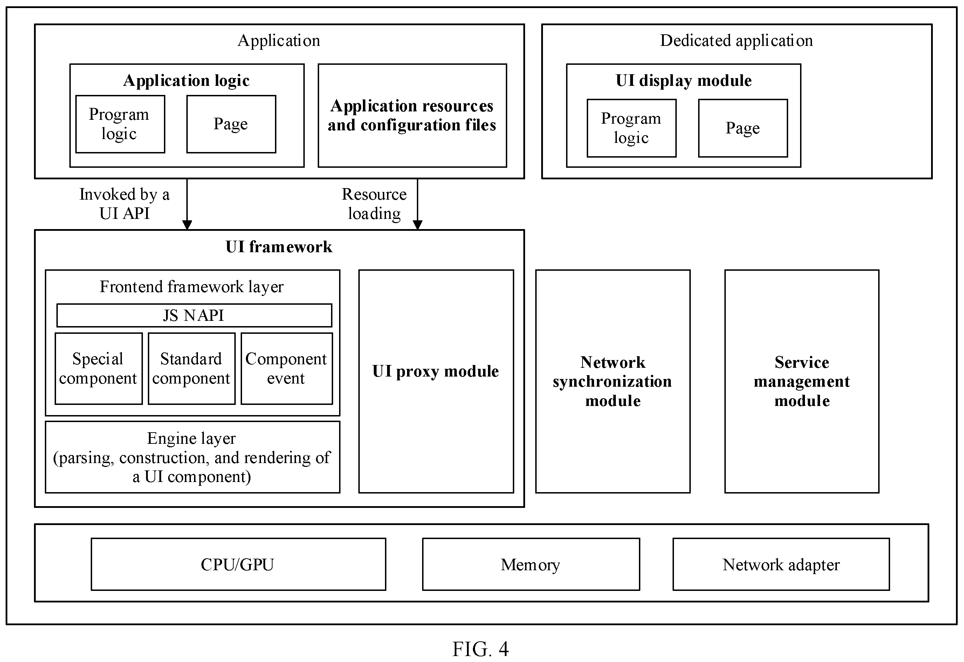

FIG. 4 is a diagram of a software and hardware architecture of an electronic device according to an embodiment of this application. The electronic device may serve as a source device or a destination device. The electronic device includes an application part, a system UI framework (UI framework for short), a network synchronization module, a service management module, a processor, a memory, a network adapter, and the like.

The application part includes an application installed after delivery (referred to as an application in FIG. 4 for short) and a system application installed before delivery (referred to as a dedicated application in FIG. 4 for short). The application has an application logic part and application resources and configuration files. The application logic part includes program logic (logic) and pages (pages). The application resources and configuration files include, for example, media (media) resources and raw files (raw files). In this embodiment of this application, a dedicated application on the destination device includes a UI display module, and a dedicated application on the source device may not include the UI display module, or may certainly include the UI display module. The UI display module also includes two parts: logic and pages.

The UI framework includes a frontend framework layer, an engine layer, and a UI proxy module. The frontend framework layer includes an application programming interface, special components (for example, some non-standard components), a standard component, and a component event. The application programming interface is, for example, a JavaScript native application programming interface (JavaScript native application programming interface, JS NAPI). The engine layer is used to parse and construct a UI component, and render a page.

In this embodiment of this application, each UI node corresponds to a component, the component is used to determine the UI node, and the component includes a first-type component and a second-type component. A corresponding image is drawn for the first-type component based on a non-UI framework. In other words, the first-type component can be constructed based on the UI framework, but the corresponding image is drawn based on the non-UI framework. For example, the corresponding image is drawn based on the non-UI framework by running first program code, and the first program code is provided by another framework or a developer of an application. A corresponding image is drawn for the second-type component based on the UI framework. In other words, the UI framework can construct and draw the corresponding image for the second-type component. A UI node corresponding to the first-type component is referred to as a first-type node, and a UI node corresponding to the second-type component is referred to as a second-type node. During specific implementation, the first-type component includes a non-system preset component, for example, a component customized by the developer of the application, and may further include some special components preset in a system, for example, a surface component, a web component, and a video component. The second-type component includes some standard components preset in the system, for example, an image component. In some embodiments, the first-type component may also be referred to as the non-standard component, and the second-type component may be referred to as the standard component. In other words, the customized component and the special component may be referred to as the non-standard components, and another component may be referred to as the standard component.

It should be understood that one component corresponds to one or more UI nodes, and an image of the one or more UI nodes can be generated by drawing one component.

The processor includes a central processing unit (central processing unit, CPU), a graphics processing unit (graphics processing unit, GPU), and/or the like. The processor, the memory, and the network adapter provide hardware support for application program running, data processing, and data sending, which specifically includes providing a system resource, a network resource, and the like.

It should be understood that the UI display module, the UI proxy module, the network synchronization module, and the service management module in FIG. 4 are modules newly added in this embodiment of this application compared with an electronic device in a related technology.

The following describes functions of the UI display module, the UI proxy module, the network synchronization module, and the service management module in this embodiment of this application with reference to FIG. 4.

When projection starts, a service management module of the source device and a service management module of the destination device are configured to perform projection mode negotiation, to determine which one of a plurality of projection modes is currently used. The plurality of projection modes include a mirroring mode, a UI data stream mode (that is, a projection mode provided in this embodiment of this application), and the like. When the UI data stream mode is determined to be used, the destination device starts the UI display module of the destination device. After the source device executes application logic of a to-be-projected application program and determines or updates a UI structure and UI attribute data of a to-be-projected area based on the UI framework, a UI proxy module of the source device obtains the UI structure and the UI attribute data, or UI update data, and sends the UI structure and the UI attribute data, or the UI update data to a network synchronization module of the destination device via a network synchronization module of the source device. AUI proxy module of the destination device creates a display area or updates a UI based on the obtained UI structure and UI attribute data of the to-be-projected area, or the obtained UI update data, renders a corresponding image through an engine layer of the destination device, and displays the projection area via the UI display module of the destination device.

Specific devices of the source device and the destination device are not limited in this embodiment of this application. For example, the source device may be a mobile phone, a tablet computer, a desktop computer, a notebook computer, or the like, and the destination device may be a mobile phone, a notebook computer, a desktop computer, a projector, or the like.

A system architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the system architecture and emergence of new service scenarios, the technical solutions provided in embodiments of this application are also applicable to similar technical problems.

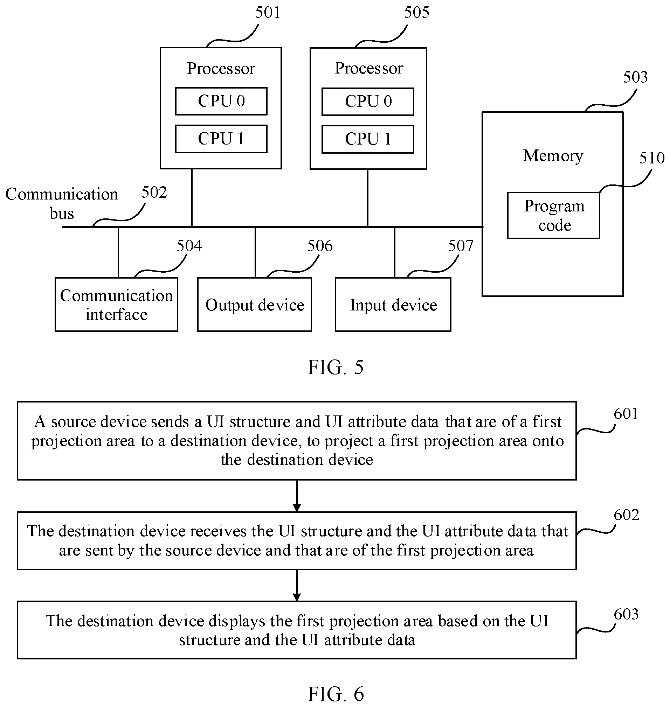

FIG. 5 is a diagram of a structure of an electronic device according to an embodiment of this application. In a possible implementation, the electronic device is the source device or the destination device shown in FIG. 3. The electronic device includes one or more processors 501, a communication bus 502, a memory 503, and one or more communication interfaces 504.

The processor 501 includes a CPU, a GPU, a network processor (network processor, NP), a microprocessor, or is one or more integrated circuits configured to implement the solutions of this application, for example, an application-specific integrated circuit (application-specific integrated circuit, ASIC), a programmable logic device (programmable logic device, PLD), or a combination thereof. In a possible implementation, the PLD is a complex programmable logic device (complex programmable logic device, CPLD), a field-programmable gate array (field-programmable gate array, FPGA), generic array logic (generic array logic, GAL), or any combination thereof.

The communication bus 502 is configured to transfer information between the foregoing components. In a possible implementation, the communication bus 502 is classified into an address bus, a data bus, a control bus, and the like. For ease of representation, only one bold line is used for representation in the figure, but this does not mean that there is only one bus or only one type of bus.

In a possible implementation, the memory 503 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, this is not limited hereto. The memory 503 exists independently, and is connected to the processor 501 through the communication bus 502, or the memory 503 is integrated with the processor 501.

The communication interface 504 is configured to communicate with another device or a communication network via any apparatus like a transceiver. The communication interface 504 includes a wired communication interface, and in a possible implementation, further includes a wireless communication interface. The wired communication interface is, for example, an Ethernet interface. In a possible implementation, the Ethernet interface is an optical interface, an electrical interface, or a combination thereof. The wireless communication interface is a wireless local area network (wireless local area network, WLAN) interface, a cellular network communication interface, a combination thereof, or the like.

In some embodiments, the electronic device includes a plurality of processors, for example, the processor 501 and a processor 505 shown in FIG. 5. Each of these processors is a single-core processor or a multi-core processor. In a possible implementation, the processor herein is one or more devices, circuits, and/or processing cores configured to process data (for example, computer program instructions).

During specific implementation, in an embodiment, the electronic device further includes an output device 506 and an input device 507. The output device 506 communicates with the processor 501, and can display information in a plurality of manners. For example, the output device 506 is a liquid crystal display (liquid crystal display, LCD), a light-emitting diode (light-emitting diode, LED) display device, a cathode ray tube (cathode ray tube, CRT) display device, or a projector (projector). The input device 507 communicates with the processor 501, and can receive an input of a user in a plurality of manners. For example, the input device 507 is a mouse, a keyboard, a touchscreen device, or a sensing device.

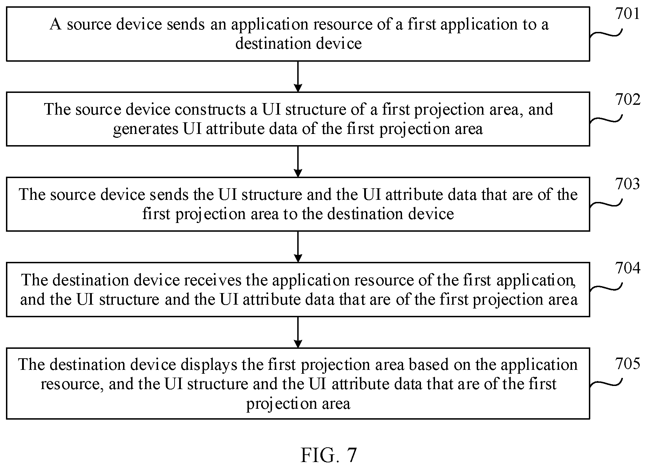

In some embodiments, the memory 503 is configured to store program code 510 for executing the solutions of this application, and the processor 501 can execute the program code 510 stored in the memory 503. The program code includes one or more software modules. The electronic device can implement, based on the program code 510 in the memory 503 via the processor 501, a projection method provided in the following embodiment in FIG. 6 or FIG. 7.

FIG. 6 is a flowchart of a projection method according to an embodiment of this application. The method is applied to a projection system, and the projection system includes a source device and a destination device. Specifically, the source device includes a source-end projection module, and the destination device includes a destination-end projection module. The method may be specifically applied to the source-end projection module and the destination-end projection module. Refer to FIG. 6. The method includes the following steps.

**Step 601:** The source device sends a UI structure and UI attribute data that are of a first projection area to the destination device, to project a first projection area onto the destination device.

The UI structure indicates a layout relationship between a plurality of UI nodes in the first projection area, the UI attribute data indicates a rendering-related attribute of each of the plurality of UI nodes, and the UI structure and the UI attribute data are used to display the first projection area on the destination device.

That is, the source device synchronizes data at a UI layer to the destination device. However, before the UI structure and the UI attribute data are synchronized, according to an application instruction, the source device may need to construct the UI structure based on a UI framework of the source device, and generate the UI attribute data.

In some embodiments, after a projection procedure starts, the source device further sends an application resource of a first application to the destination device. The first application is an application to which the first projection area belongs, and the application resource is a resource required for rendering the first projection area.

The first projection area is a partial or entire area on a first page of the first application. The source device runs the first application, and the destination device does not run the first application. For example, the first application is not installed on the destination device. The first application may be a system application or a non-system application.

**Step 602:** The destination device receives the UI structure and the UI attribute data that are sent by the source device and that are of the first projection area.

**Step 603:** The destination device displays the first projection area based on the UI structure and the UI attribute data.

The destination device loads the UI structure based on a UI framework of the destination device to arrange the plurality of UI nodes in the first display area, and sets an attribute of each of the plurality of UI nodes based on the UI attribute data to reconstruct, render, and display the first projection area.

In this solution, the source device sends the UI structure and the UI attribute data of the projection area to the destination device. In this way, the destination device can construct, reconstruct, render, and display the corresponding projection area based on the UI structure and the UI attribute data at the UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

The following uses an example in which the source device synchronizes the application resource, the UI structure, and the UI attribute data to the destination device to describe in detail a specific implementation of the embodiment in FIG. 6 with reference to FIG. 7.

FIG. 7 is a flowchart of another projection method according to an embodiment of this application. The method is applied to a projection system, and the projection system includes a source device and a destination device. Specifically, the source device includes a source-end projection module, and the destination device includes a destination-end projection module. The method may be specifically applied to the source-end projection module and the destination-end projection module. Refer to FIG. 7. The method includes the following steps.

**Step 701:** The source device sends an application resource of a first application to the destination device.

The source device runs the first application. After a projection procedure starts, the source device sends the application resource of the first application to the destination device. The application resource includes a resource required for rendering a projection area, for example, a media resource in an application package such as configuration data, a picture (such as an icon), and text.

It should be understood that, synchronization of the application resource is to prepare for subsequent rendering and display by the destination device, and the destination device may use a part or all of the application resource in the subsequent rendering and display, or may not use the application resource. In view of this, in another possible implementation, each time a projection area is projected, the source device synchronizes a used application resource to the destination device. In other words, the source device synchronizes, in real time, an application resource required by a current projection area, instead of synchronizing all application resources to the destination device at a beginning of the projection procedure.

It can be learned from the foregoing that a projection mode provided in this embodiment of this application is a UI data stream mode, and the UI data stream mode is a mode in which corresponding UI attribute data is transmitted to all UI nodes in a same projection area. A projection mode in a related technology includes a mirroring mode and a continuation mode. If the source device supports only the UI data stream mode, or the source device supports a plurality of projection modes but is configured to use the UI data stream mode by default, after the projection procedure starts, the source device directly sends the application resource of the first application to the destination device. If the source device supports the plurality of projection modes, but a projection mode is not configured to be used by default, before sending the application resource of the first application to the destination device, when determining that a current projection mode is the UI data stream mode in the plurality of projection modes, the source device performs the step of sending the application resource of the first application to the destination device. In other words, when the source device supports the plurality of projection modes, the source device and the destination device may determine the current projection mode from the plurality of projection modes.

There are a plurality of implementations for determining the current projection mode between the source device and the destination device, and three of the implementations are described herein.

In a first implementation of determining the current projection mode, the source device sends a first request to the destination device. The first request is used to obtain device resource information of the destination device. The destination device receives the first request sent by the source device, and sends the device resource information of the destination device to the source device in response to the first request. The source device receives the device resource information of the destination device sent by the destination device, and determines the current projection mode from the plurality of projection modes based on the device resource information of the destination device, for example, determines that the current projection mode is the UI data stream mode. In other words, the device resource information of the destination device is used by the source device to determine, from the plurality of projection modes, that the current projection mode is the UI data stream mode. In a possible implementation, the source device sends a first message to the destination device. The first message indicates the current projection mode, for example, indicates that the current projection mode is the UI data stream mode.

In a second implementation of determining the current projection mode, the source device sends device resource information of the source device to the destination device. The destination device receives the device resource information sent by the source device of the source device, determines, based on the device resource information of the source device, that the current projection mode is the UI data stream mode, and sends a first response to the source device. The first response indicates the current projection mode, for example, indicates that the current projection mode is the UI data stream mode. The source device receives the first response sent by the destination device, and obtains the current projection mode by parsing the first response.

In a third implementation of determining the current projection mode, the source device selects the current projection mode from the plurality of projection modes based on a detected user operation. For example, the user selects the UI data stream mode as the current projection mode. In other words, this solution supports a user (for example, a skilled person) to select a projection mode as required.

The device resource information indicates one or more of software and hardware capabilities, an operating system version, and a UI framework version of the corresponding device. The software and hardware capabilities of the device include software and hardware specifications such as a CPU architecture of the device, whether the device has a GPU, a GPU architecture of the device, and a graphics card configuration. In the foregoing first two implementations of determining the current projection mode, a condition for determining, based on the device resource information, that the current projection mode is the UI data stream mode includes that both an operating system and a UI framework of the destination device need to be compatible with an operating system and a UI framework of the source device, and software and hardware of the destination device support construction, rendering, and display of the page in the UI data stream mode.

In this embodiment of this application, the plurality of projection modes supported by the source device further include one or more of the mirroring mode, a hybrid mode, and the continuation mode. The mirroring mode is a mode in which all UI nodes in a same projection area are rendered to obtain a rendered image of a corresponding projection area for transmission. The hybrid mode is also referred to as a media stream and UI data stream mode. The hybrid mode is a mode in which corresponding UI attribute data is transmitted to a second UI node, and a third UI node is rendered to obtain a rendered image of the third UI node for transmission. The second UI node and the third UI node are different UI nodes in a same projection area. The continuation mode is a mode in which the first application is continued on the destination device for running and the source device stops running the first application.

It should be understood that one projection area includes a plurality of UI nodes, and the hybrid mode may be understood as that different projection modes may be used for two different UI nodes in the same projection area. For example, content of a second UI node in a projection area is a video, and content of a third UI node is an icon. The UI data stream mode may be used for the second UI node. For example, the source device transmits a link of the video to the destination device, and the media stream mode is used for the third UI node, that is, the source device transmits a rendered image of the icon to the destination device.

In a possible implementation, when the source device includes the service management module and the network synchronization module shown in FIG. 4, the source device may negotiate the current projection mode with the destination device via the service management module, and send the application resource of the first application to the destination device via the network synchronization module.

**Step 702:** The source device constructs the UI structure of the first projection area, and generates the UI attribute data of the first projection area.

When performing step 701 or after performing step 701, the source device constructs the UI structure of the first projection area, and generates the UI attribute data of the first projection area. Specifically, the source device constructs the UI structure of the first projection area based on the UI framework of the source device, and generates the UI attribute data of the first projection area. Before an initial projection area is projected, the source device needs to load the UI framework of the source device, for example, load the UI framework when the source device starts the first application, and subsequently, constructs projection areas of pages based on the loaded UI framework.

The first projection area is a partial or entire area on a first page of the first application. When the first projection area is the partial area on the first page, the source device constructs a UI structure of the first page, and generates UI attribute data of the first page, or the source device may construct only the UI structure of the first projection area, and generate the UI attribute data of the first projection area.

In a possible implementation, the user may perform a selection operation on a partial or entire display area of the source device to determine the first projection area. In other words, in this solution, the user is supported to select the projection area. Alternatively, the first projection area is determined based on a default setting of the first application, that is, this solution supports automatic projection of the partial area on the page in the application.

The UI structure of the first projection area includes a plurality of UI nodes, each UI node corresponds to a component, and the plurality of UI nodes include a first UI node. The source device obtains the first UI node by creating a first source-end component. To be specific, the first UI node in the source device corresponds to the first source-end component, the first source-end component belongs to a first-type component, and a corresponding image is drawn for the first-type component based on a non-UI framework. For example, the first-type component is drawn based on the non-UI framework by running first program code, and the first program code is provided by another framework or a developer of the first application.

When the plurality of UI nodes include the first UI node, the UI attribute data includes a drawing instruction of the first source-end component, the drawing instruction of the first source-end component is an instruction generated in a process in which the source device draws the first source-end component, and the drawing instruction of the first source-end component is used by the destination device to draw an unrendered image of the first source-end component based on the non-UI framework. Alternatively, the UI attribute data includes a rendered image of the first source-end component, and the rendered image of the first source-end component is obtained by rendering an unrendered image of the obtained first source-end component by the source device after drawing the first source-end component.

In this embodiment of this application, the first source-end component corresponding to the first UI node belongs to the first-type component. The first-type component includes a component customized by the developer of the application and/or some special components preset by a system. The special components are, for example, a surface component, a web component, and a video component. In some embodiments, the first-type component may be referred to as a non-standard component. The first component includes at least one customized component and/or at least one special component. A drawing instruction of the first-type node includes the first program code.

It should be understood that, generally, one component is used to determine at least one UI node, that is, one or more UI nodes may be obtained by creating a component. If a component belongs to the first-type component, each UI node determined based on the component belongs to the first-type node. Certainly, in some other embodiments, one UI node is determined based on at least one component, that is, one UI node may be drawn based on one or more components, and the one or more components may include the first-type component and/or a second-type component. When a component required for drawing a UI node includes at least one first-type component, the UI node is the first-type node. It can be learned that, during specific implementation, a correspondence between a component and a UI node may be one-to-one, one-to-many, or many-to-one, which may be understood as related to defining a granularity of the UI node.

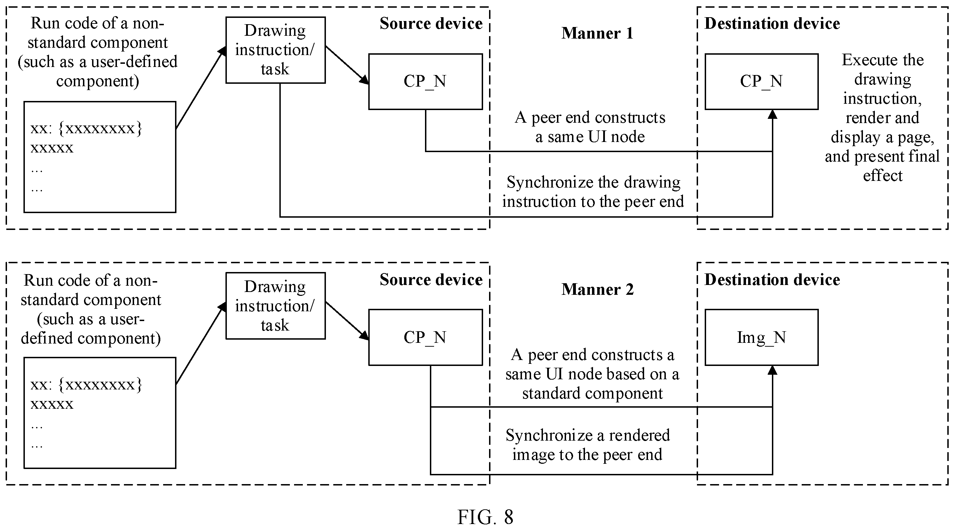

In brief, there are two projection manners corresponding to the non-standard component. As shown in FIG. 8, in one manner, the source device synchronizes a drawing instruction (or referred to as a drawing task) corresponding to the non-standard component to the destination device, and the destination device constructs and draws a same UI node in response to the received drawing instruction. For example, the UI node is drawn based on a CustomPaint node (CP_N for short) component that is the same as that on the source device, and is rendered and displayed to present final effect. In another manner, the source device synchronizes a rendered image of the non-standard component to the destination device, and the destination device constructs a UI node based on a standard component (for example, an ImageNode (Img_N for short) component), and renders and displays an image of the UI node. In other words, UI attribute data of the first-type node includes the drawing instruction corresponding to the non-standard component or the rendered image. It should be understood that, the rendered image of the non-standard component synchronized by the source device to the destination device may be a static picture, or may be a dynamic picture, that is, an animation. When synchronizing the rendered image of the non-standard component to the destination device, the source device may further synchronize a corresponding control size.

The plurality of UI nodes usually further include the second UI node, and a corresponding component included in the second UI node is a standard component. UI attribute data of the second UI node may include UI control status data such as a character, a picture, an animation, a video, a character attribute, a cursor location, a sliding location, and a color of a corresponding node. In other words, the UI attribute data of the second UI node includes drawing attribute data of the second UI node, that is, attribute data that can be used to draw the second UI node. The component corresponding to the second UI node is the second-type component, and a corresponding image is drawn for the second-type component based on the UI framework. In other words, the UI framework can construct and draw the corresponding image for the second-type component. In other words, for the standard component, the source device synchronizes the attribute data that can be used to draw the corresponding UI node to the destination device. Certainly, in some other embodiments, drawing instructions of some standard components may also be synchronized.

In this embodiment of this application, UI structures of a plurality of UI nodes in a projection area may be represented as a tree structure, or may be represented as another structure.

In a possible implementation, after constructing the UI structure of the first projection area, the source device generates a unique projection area identifier for the first projection area. The projection area identifier may be denoted as a source profile identifier (source profile identifier, SPID). In a possible implementation, the source device may further generate a unique node identifier for each of the plurality of UI nodes. The node identifier may be denoted as a source frame identifier (source frame identifier, SFID). When the first projection area is the entire area on the first page, the source device generates a unique page identifier for the first page. In other words, in this case, the projection area identifier is also referred to as the page identifier.

Step 703: The source device sends the UI structure and the UI attribute data that are of the first projection area to the destination device.

When performing step 701 or after performing step 701, the source device may send the UI structure and the UI attribute data that are of the first projection area to the destination device. The application resource of the first application and the UI structure and the UI attribute data that are of the first page are jointly used for the destination device, and the first projection area is reconstructed, rendered, and displayed based on the UI framework of the destination device.

When the source device includes the UI proxy module and the network synchronization module shown in FIG. 4, the source device may obtain the UI structure and the UI attribute data that are of the first projection area via the UI proxy module, and send the UI structure and the UI attribute data that are of the first projection area to the destination device via the network synchronization module.

It can be learned from the foregoing that the source device in this solution can support the plurality of projection modes. In this case, in a possible implementation, projection modes of different projection areas may be different. In this case, before sending the UI structure and the UI attribute data that are of the first projection area to the destination device, the source device determines, from the plurality of projection modes according to a mode adaptation algorithm, that a projection mode of the first projection area is the UI data stream mode.

In a possible implementation, before projection is performed on each projection area, the source device may determine a projection mode of the current projection area from the plurality of projection modes according to the mode adaptation algorithm. Alternatively, the source device may determine a projection mode of the current projection area from the plurality of projection modes according to the mode adaptation algorithm at each time interval. The time interval may be one minute, three minutes, or the like.

An implementation in which the source device determines, from the plurality of projection modes according to the mode adaptation algorithm, that the projection mode of the first projection area is the UI data stream mode is: determining, from the plurality of projection modes according to the mode adaptation algorithm and the UI structure and the UI attribute data that are of the first projection area and/or real-time computing capability information of the destination device, that the projection mode of the first projection area is the UI data stream mode.

For example, the destination device sends the real-time computing capability information of the destination device to the source device. The real-time computing capability information is used by the source device to determine the projection mode of the current projection area from the plurality of projection modes according to the mode adaptation algorithm.

For example, when a real-time computing capability of the destination device becomes weak because the destination device performs a rendering operation for long time, the source device may determine, from a plurality of projection modes, that the projection mode of the current projection area is the mirroring mode.

When an input of the mode adaptation algorithm includes the UI structure and the UI attribute data that are of the first projection area, the mode adaptation algorithm is used to analyze the UI structure and the UI attribute data that are of the first projection area, to determine whether each UI node in the UI structure can be reconstructed on the destination device in the UI data stream mode, and determine a data amount of the UI structure and the UI attribute data that need to be transmitted in the UI data stream mode and that are of the first projection area.

For example, a component corresponding to a UI node in a second projection area is the non-standard component. The source device analyzes the UI node, and determines that the UI node cannot be reconstructed on the destination device in the UI data stream mode. In this case, the source device may determine that a projection mode of the second projection area is the mirroring mode or the hybrid mode. When a data amount of a UI structure and UI attribute data that need to be transmitted in the UI data stream mode and that are of the second projection area is greater than a threshold, the source device may determine that the projection mode of the second projection area is the mirroring mode or the hybrid mode.

It should be understood that the source device may comprehensively analyze the UI structure and the UI attribute data that are of the first projection area and the real-time computing capability information of the destination device according to the mode adaptation algorithm, to determine the projection mode of the first projection area.

It should be further understood that the current projection mode is determined in step 701 when the projection is just started, and the projection mode of the current projection area can be further determined in the projection process according to the mode adaptation algorithm in step 703. In other words, in this solution, the projection mode can be switched in the projection process, to reduce power consumption of the source device and the destination device, and improve projection effect.

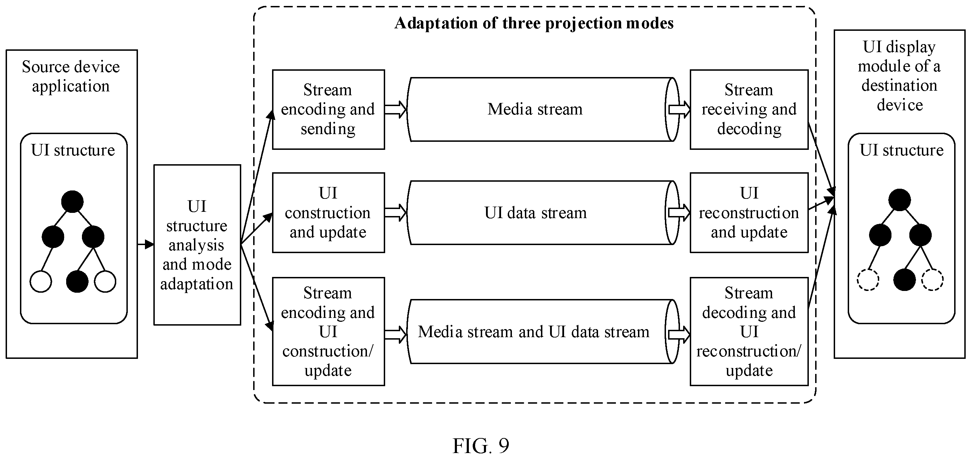

FIG. 9 is a diagram of mode adaptation according to an embodiment of this application. Refer to FIG. 9, the source device supports the three projection modes. The three projection modes are: the mirroring mode (that is, transmitting a media stream), the UI data stream mode (that is, transmitting a UI data stream), and the hybrid mode (that is, transmitting a media stream and a UI data stream). A UI structure of a projection area constructed by the source device is a tree structure including a plurality of UI nodes. The plurality of UI nodes include first-type nodes (corresponding to first-type components) filled in white and second-type nodes (corresponding to second-type components) filled in black shown in FIG. 9. The source device determines a projection mode of the projection area from the foregoing three projection modes through UI structure analysis and mode adaptation, and projects the projection area in the determined projection mode.

In the mirroring mode, the source device needs to perform encoding to form the media stream (that is, a video stream), and send the media stream, and the destination device needs to receive and decode the media stream. In the UI data stream mode, the source device needs to construct and update the UI structure of the projection area, and the destination device needs to reconstruct and update the projection area, that is, reconstruct and update a UI. In the hybrid mode, the source device needs to encode and send a partially rendered image (for example, a rendered image of the first-type node) of the projection area, and transmit the UI structure of the projection area and UI attribute data of a remaining part (for example, UI attribute data of the second-type node) of the projection area. In other words, the source device needs to perform stream encoding, and UI construction and update. The destination device needs to decode the partial image of the projection area, and reconstruct the remaining part of the projection area. In other words, the destination device needs to perform stream decoding, and UI reconstruction and update.

In a possible implementation, when the source device supports the plurality of projection modes, the source device can further display the current projection mode, and the current projection mode is one of the plurality of projection modes. A manner in which the source device displays the current projection mode is not limited in this embodiment of this application, including that a display location, a display font, a display color, and the like of the current projection mode are not limited.

In a possible implementation, when sending the UI structure and the UI attribute data that are of the first projection area to the destination device, the source device also sends the identifier of the first projection area, for example, the SPID of the first projection area. The UI attribute data sent by the source device includes identifiers of the plurality of UI nodes in the first projection area, for example, an SFID of each of the plurality of UI nodes.

In a possible implementation, the source device may perform serialization processing on to-be-sent data (including the UI node and the UI attribute data that are of the first projection area), to obtain serialized page data, and send the serialized page data to the destination device. The serialization processing may refer to assembling (or encoding) the to-be-sent data into a character string or a binary array (for example, a binary buffer) or file. Certainly, the source device may alternatively process the to-be-sent data in another data processing manner. This is not limited in this embodiment of this application.

During specific implementation, the source device may send a page reconstruction message to the destination device. The page reconstruction message carries the serialized page data.

**Step 704:** The destination device receives the application resource of the first application, and the UI structure and the UI attribute data that are of the first projection area.

When the destination device includes the network synchronization module shown in FIG. 4, the destination device receives, via the network synchronization module, the application resource, and the UI structure and the UI attribute data that are of the first projection area, that are sent by the source device.

In a possible implementation, when the source device sends the serialized page data, the destination device performs deserialization processing on the received serialized page data, to obtain the application resource of the first application, and the UI structure and the UI attribute data that are of the first projection area. The deserialization processing of the destination device is a matching and mirroring operation of the serialization processing of the source device. For example, the deserialization processing refers to decoding the serialized page data.

**Step 705:** The destination device displays the first projection area based on the application resource, and the UI structure and the UI attribute data that are of the first projection area.

In this embodiment of this application, the destination device loads the UI structure based on the UI framework of the destination device to arrange the plurality of UI nodes in the first display area, and sets an attribute of each of the plurality of UI nodes based on the UI attribute data to reconstruct, render, and display the first projection area. In other words, the destination device can reconstruct, render, and display the first projection area based on the UI framework. The destination device may arrange the plurality of UI nodes in the first display area by creating the plurality of UI nodes on a first blank page. In other words, the first blank page carries the plurality of UI nodes.

When the destination device includes the UI proxy module and the UI display module shown in FIG. 4, the destination device constructs and renders the first projection area in a UI proxy mode in the UI framework, and displays the rendered first projection area via the UI display module.

The first display area may be a partial or entire display area of the destination device, that is, the first display area is a full-screen area or a partial screen area of the destination device. It should be noted that the first projection area of the source device may alternatively be the partial or entire display area of the source device. When the source device displays the first projection area in full screen, the destination device may display the first projection area in full screen, or may not display the first projection area in full screen. For example, a display area occupied for projection is disposed on the destination device. Similarly, when the source device does not display the first projection area in full screen, the destination device may display the first projection area in full screen, or may not display the first projection area in full screen.

It can be learned from the foregoing that, for the first-type node and the second-type node, the data synchronized by the source device is different. The following describes in detail an implementation in which the destination device reconstructs the first-type node and the second-type node.

A manner of reconstructing the first-type node (corresponding to the non-standard component) is described.

For example, the first UI node in the plurality of UI nodes belongs to the first-type node. When the UI attribute data includes the drawing instruction of the first source-end component, the destination device loads the UI structure based on the UI framework to construct (or arrange) the plurality of UI nodes, including creating a first destination-end component to obtain the first UI node, and drawing, according to the drawing instruction of the first source-end component, an image of the first destination-end component to obtain an unrendered image of the first source-end component.

The first destination-end component is a system preset component of the destination device. For example, the first destination-end component includes a first system preset component of the destination device. During specific implementation, the first destination-end component includes one or more of a standard component, a special component, or a component provided by another framework. The first destination-end component and the foregoing first source-end component have a same or similar function. A type of the first destination-end component may be the same as a type of the first source-end component. As shown in FIG. 8, both the first source-end component and the first destination-end component are CustomPaint node components. Certainly, a second component and a first component may be of different types.

When the UI attribute data includes the rendered image of the first source-end component, the destination device loads the UI structure based on the UI framework to construct the plurality of UI nodes, including creating a second destination-end component to obtain the first UI node, and enabling, based on the rendered image of the first source-end component and by setting a UI attribute of the second destination-end component, the first UI node to carry the rendered image of the first source-end component.

It should be understood that the rendered image of the first source-end component includes rendered pixels, and may further include attributes such as a control size and an animation. The destination device sets attributes of the second destination-end component to set the attributes such as the rendered pixels, the control size, and the animation of the first UI node into the first UI node, to obtain the rendered image of the first source-end component.

The second destination-end component is also a system preset component of the destination device. For example, the second destination-end component includes a second system preset component of the destination device. During specific implementation, the second destination-end component may also include one or more of a standard component, a special component, or a component provided by another framework. The second destination-end component and the first source-end component may have different functions, and the second destination-end component and the first source-end component may be of different types, that is, the second destination-end component is different from the first source-end component. For example, the first source-end component is the CustomPaint node component shown in FIG. 8, and the second destination-end component is the ImageNode component shown in FIG. 8.

A manner of reconstructing the second-type node (corresponding to the standard component) is described.

For example, the second UI node in the plurality of UI nodes belongs to the second-type node. It can be learned from the foregoing description that the UI attribute data of the second UI node may include the drawing attribute data of the second UI node, for example, UI control status data, such as the character, the picture, the animation, the video, the character attribute, the cursor location, the sliding location, and the color of the second UI node. The destination device loads the UI structure based on the UI framework to construct the plurality of UI nodes, including creating a third destination-end component to obtain the second UI node, and setting an attribute of the third destination-end component based on the drawing attribute data of the second UI node and the UI framework, to draw a corresponding image of the second UI node.

The third destination-end component and a type of a component (referred to as a second source-end component in the following) used when the source device draws the second UI node are of a same type. For example, the third destination-end component and the second source-end component are same standard components. Certainly, in some possible embodiments, the third destination-end component and the second source-end component may be of different types, provided that the third destination-end component and the second source-end component have a same or similar function.

In a possible implementation, after constructing the UI structure of the first projection area, the destination device generates a unique projection area identifier for the first projection area. The projection area identifier may be denoted as a destination profile identifier (destination profile identifier, DPID). The destination device records a correspondence between the SPID and the DPID of the first projection area, for example, correspondingly stores the SPID and the DPID of the first projection area in a page mapping table. When the first projection area is the entire area on the first page, the destination device generates a unique page identifier for the first page. In other words, in this case, the projection area identifier is also referred to as the page identifier.

In a possible implementation, the destination device may further generate a unique node identifier for each of the plurality of constructed UI nodes. The node identifier may be denoted as a destination frame identifier (destination frame identifier, DFID). The destination device records a correspondence between the SFID and the DFID of each UI node, for example, correspondingly stores the SFID and the DFID of each UI node in a node mapping table.

The foregoing describes, by using step 701 to step 705, an implementation process in which the source device projects the first projection area onto the destination device. The following describes a projection process in a case in which the first projection area is updated, that is, the UI structure and/or the UI attribute data that are/is of the first projection area are/is updated, and the first projection area is switched to the second projection area.

When the UI structure and/or the UI attribute data that are/is of the first projection area are/is updated, the source device sends UI update data of the first projection area to the destination device. The UI update data is used by the destination device to update the first projection area. The destination device receives the UI update data of the first projection area sent by the source device, and updates the first page based on the UI update data of the first projection area.

There are at least three cases in which the first projection area is updated. A first case is a case in which the destination device reversely controls the source device, a second case is a case in which the user operates the source device, and a third case is a case in which the source device performs an automatic update.

In the first case (that is, the case in which the destination device reversely controls the source device) in which the first projection area is updated, the destination device sends first manipulation information to the source device in response to a first operation performed by a destination-end user on the first projection area. The first manipulation information indicates the source device to perform a second operation on the first projection area, and update the UI structure and/or the UI attribute data that are/is of the first projection area. The source device receives the first manipulation information sent by the destination device. The first manipulation information indicates the first operation performed by the destination-end user on the first projection area. The source device performs the second operation on the first projection area based on the first manipulation information, and updates the UI structure and/or the UI attribute data that are/is of the first projection area.

The second operation and the first operation are the same or may be different, and objects of the second operation and the first operation may be the same or may be different. For example, in an example, a video is being played in the first projection area displayed by the destination device, and the destination-end user presses and holds a right area of the video picture to fast forward or rewind the video. After the touch and hold operation of the destination-end user is used to reversely control the source device, the source device performs the fast-forward or rewind operation. To be specific, in this example, the first operation is the touch and hold operation, the object of the first operation is a UI node corresponding to the right area of the video picture, the second operation is the fast-forward or rewind operation, and the object of the second operation is a UI node corresponding to a progress bar. In another example, the first projection area displayed by the destination device includes a pause button. The destination-end user taps the pause button. After the tapping operation is used to reversely control the source device, the source device also performs the same tapping operation. To be specific, in this example, the first operation and the second operation are the same, both the first operation and the second operation are tapping operations, the objects of the first operation and the second operation are the same, and both the objects of the first operation and the second operation are UI nodes corresponding to buttons.

In view of this, the first manipulation information sent by the destination device to the source device may include different information based on an actual case. This is described below.

It can be learned from the foregoing description that the UI structure of the first projection area includes the plurality of UI nodes, and the UI attribute data includes the identifiers of the plurality of UI nodes. In some cases, the first manipulation information includes an identifier of the third UI node and a manipulation instruction corresponding to the first operation, the manipulation instruction instructs the second operation, and the third UI node is one of the plurality of UI nodes. An implementation in which the source device performs the second operation on the first projection area based on the first manipulation information is performing the second operation on the third UI node based on the identifier of the third UI node and the manipulation instruction. Specifically, the source device searches the plurality of UI nodes for the third UI node based on the identifier of the third UI node, and performs the second operation on the found third UI node according to the manipulation instruction.

For example, the destination-end user taps a first UI control (that is, the third UI node) in the first projection area displayed on the destination device, to trigger a tap event about the first UI control. The destination device sends, to the source device in response to the tap operation of the destination-end user, an identifier of the first UI control and a tap instruction corresponding to the tap event. The source device finds the first UI control from the plurality of UI nodes based on the identifier of the first UI control, and performs the tap operation on the first UI control according to the tap instruction.

When the destination device records the correspondence between the SFID and the DFID of each UI node, after detecting the first operation performed by the user on the third UI node, the destination device searches the correspondence between the SFID and the DFID for an SFID of the third UI node based on a DFID of the third UI node. The destination device obtains the manipulation instruction corresponding to the first operation, and sends, to the source device, the SFID of the third UI node and the manipulation instruction corresponding to the first operation. The source device finds the third UI node from the plurality of UI nodes based on the SFID of the third UI node.

In some other cases, the first manipulation information includes an identifier of a fourth UI node and operation information of the first operation, and the fourth UI node is one of the plurality of UI nodes. Another implementation in which the source device performs the second operation on the first projection area based on the first manipulation information is parsing the operation information of the first operation to determine the second operation, and performing the second operation on the fourth UI node based on the identifier of the fourth UI node. The source device may find the fourth UI node from the plurality of UI nodes based on an SFID of the fourth UI node.

For example, the destination-end user presses and holds the right area of the video picture in the first projection area, to trigger a drag operation about the progress bar (that is, the fourth UI node). In response to the press and hold operation of the destination-end user, the destination device sends the identifier of the fourth UI node and operation information of the drag operation to the source device. The source device parses the operation information of the drag operation, to determine the fast-forward or rewind operation, and performs the fast-forward or rewind operation on the progress bar based on the identifier of the progress bar.

In the second case (that is, the case in which the user operates the source device) in which the first projection area is updated, the source device updates the UI structure and/or the UI attribute data that are/is of the first page in response to a third operation performed by a source-end user on the first projection area.

It should be understood that the destination-end user is a user operating the destination device, and the source-end user is a user operating the source device. The destination-end user and the source-end user can be a same user or different users.

In the third case (that is, in the case in which the source device performs the automatic update) in which the first projection area is updated, the source device may automatically update the first projection area based on application program code or an application default setting. For example, the source device automatically switches carousel images in the first projection area.

The first case in which the first projection area is updated is triggered by the destination device, and the second case and the third case are triggered by the source device. Therefore, the second case and the third case may be classified as one case, that is, a case in which the source device triggers the update. In other words, the foregoing three cases may be considered as two cases: one is a case in which the destination device triggers the update, and the other is the case in which the source device triggers the update.

To reduce an amount of UI data transmitted by the source device to the destination device, reduce frame freezing of the destination device, and improve the projection effect, when the first projection area is updated, the source device may synchronize a changed part in the first projection area to the destination device, and do not repeatedly send an unchanged part. In other words, the UI update data of the first projection area indicates a changed UI node in the plurality of UI nodes and changed UI attribute data. The destination device updates the changed UI node in the first projection area based on the UI update data of the first projection area.

For example, the first UI node in the first projection area is a UI icon. After the user taps the first UI node on the source device, a color or transparency of the first UI node changes, for example, the color changes from gray to blue. In this case, the UI update data of the first projection area includes an identifier of the first UI node and updated color information.

The source device may send, to the destination device, serialized page update data obtained after performing serialization processing on the UI update data of the first projection area, and the destination device performs deserialization processing on the received serialized page update data, to obtain the UI update data of the first projection area. In addition, the source device may send a page update message to the destination device. The page update message carries the serialized page update data.

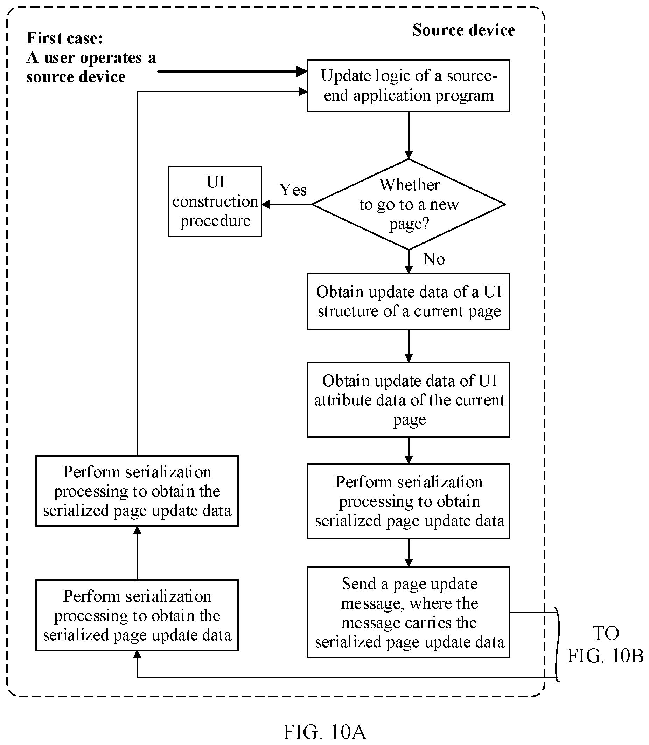

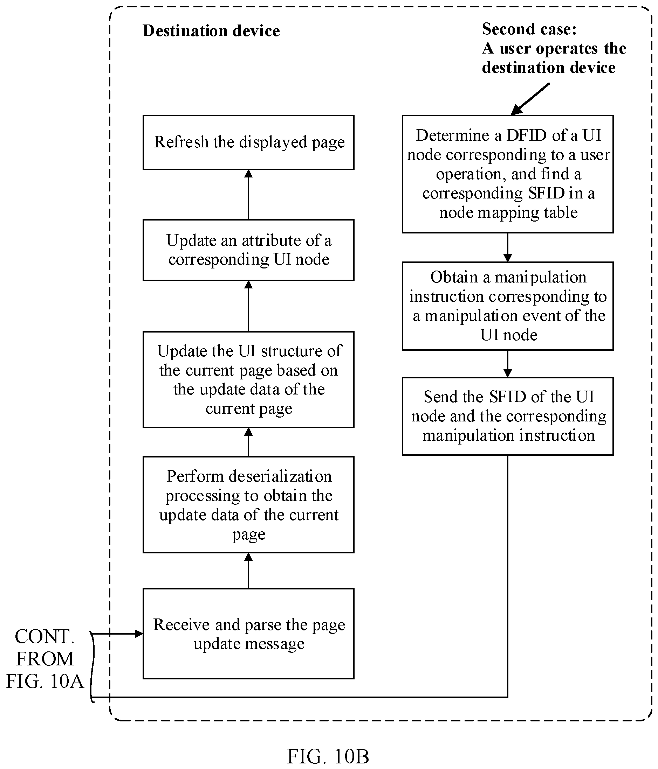

For example, the first projection area is the entire area on the first page of the first application. FIG. 10A and FIG. 10B are a flowchart of projection in a case in which a page is updated according to an embodiment of this application. FIG. 10A and FIG. 10B show the foregoing two cases of page update.

Refer to FIG. 10A and FIG. 10B. In the first case, the user operates the destination device, and the destination device determines, in response to a user operation, a DFID of a UI node corresponding to the user operation, and finds an SFID of the UI node in the node mapping table based on the DFID of the UI node. The destination device obtains a manipulation instruction corresponding to a manipulation event of the UI node, and sends the SFID of the UI node and the corresponding manipulation instruction to the source device. After receiving the SFID of the UI node and the corresponding manipulation instruction, the source device finds the corresponding UI node based on the SFID of the UI node, and performs a corresponding operation on the UI node according to the manipulation instruction, that is, injects the manipulation event into the UI node. The source device updates logic of the first application program, and determines whether the page is switched, that is, whether a new page is entered. If the new page is entered, the source device executes a UI construction procedure of the new page. If the new page is not entered, the source device obtains update data of a UI structure of the current page, obtains update data of UI attribute data of the current page, performs serialization processing on the obtained update data to obtain serialized page update data, and sends a page update message to the destination device. The page update message carries the serialized page update data. The destination device receives and parses the page update message to obtain the serialized page update data, and performs deserialization processing on the serialized page update data to obtain the update data of the current page. The destination device updates the UI structure of the current page based on the update data of the current page, and updates an attribute of a corresponding UI node. Then, the destination device refreshes the displayed page.

In the second case, the user operates the source device, and the source device updates logic of the first application program in response to a user operation, and determines whether the page is switched, that is, whether a new page is entered. Alternatively, the source device updates the logic of the first application based on the application program code or the application default setting, and after the update, determines whether the page is switched. The displayed page is finally refreshed on the destination device by using a procedure similar to that in the first case.

When the projection area is switched from the first projection area to the second projection area (for example, the first page is switched to a second page), the source device constructs a UI structure of the second projection area, generates UI attribute data of the second projection area, and sends the UI structure and the UI attribute data that are of the second projection area to the destination device. The application resource, and the UI structure and the UI attribute data that are of the second projection area are used by the destination device to reconstruct, render, and display the second projection area based on the UI framework. In other words, the source device performs operations similar to those in step 702 and step 703 to synchronize, to the destination device, the UI structure and the UI attribute data that are of the second projection area obtained through switching. The destination device receives the UI structure and the UI attribute data that are of the second projection area, and reconstructs, renders, and displays the second projection area based on the application resource, the UI structure and the UI attribute data that are of the second projection area, and the UI framework of the destination device. In other words, the destination device performs operations similar to those in step 704 and step 704 to switch the projection area.

For example, the first page is switched to the second page. The page switching includes page jumping, page rollback, and the like.

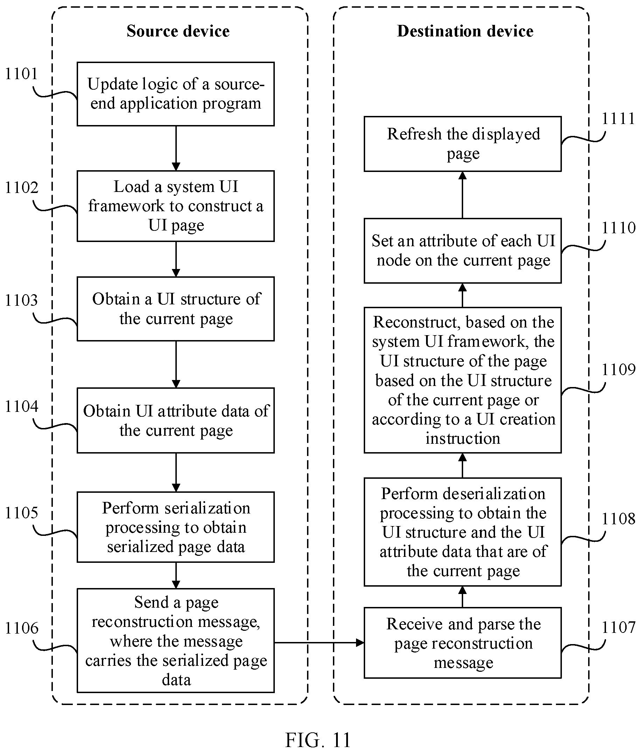

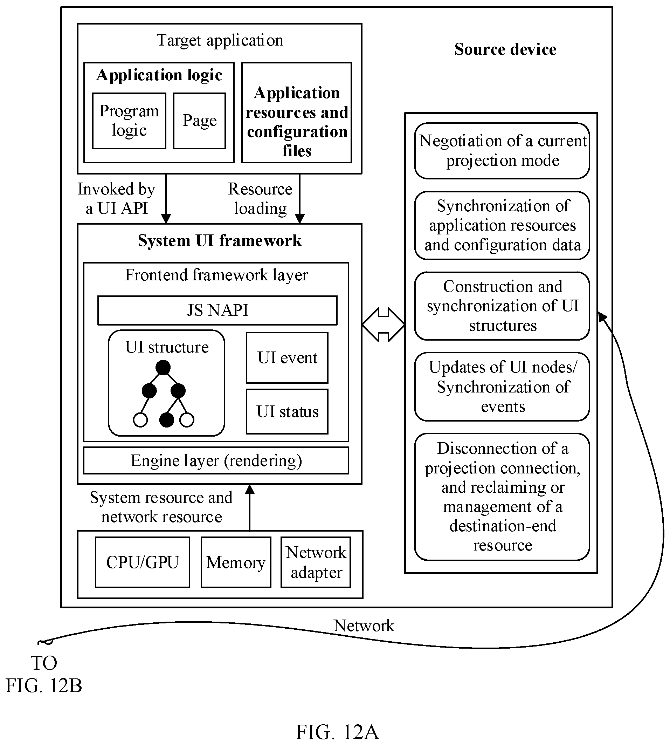

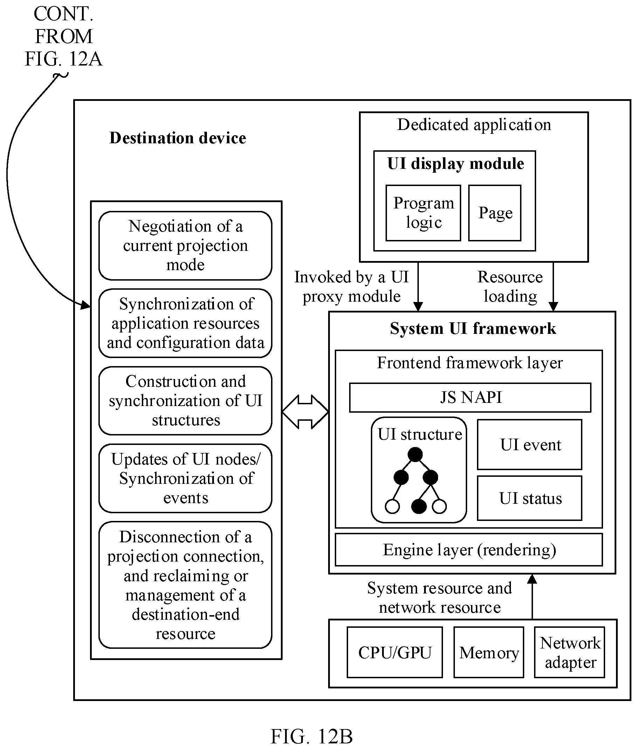

The following describes, with reference to FIG. 11, and FIG. 12A and FIG. 12B, examples of the projection method provided in embodiments of this application. It should be noted that in FIG. 11, an example in which a projection area is an entire area of a page is used for description.

FIG. 11 is a flowchart of another projection method according to an embodiment of this application. Refer to FIG. 11. The method includes the following steps.

Step 1101: A source device executes an application logic part of a first application.

Step 1102: The source device constructs a UI page, that is, constructs a to-be-projected page by loading a system UI framework of the source device.

Step 1103: The source device obtains a UI structure of the constructed UI page. The UI structure may be a tree structure or a graph structure. The UI structure includes a parent-child relationship, layout data, and a layer relationship that are between a plurality of UI nodes. In this embodiment of this application, the UI structure of the page may be obtained by directly obtaining page structure information of the UI page or by obtaining a UI creation instruction. The source device may further generate and record an SPID of the constructed UI page.

Step 1104: The source device obtains UI attribute data of the constructed UI page. The UI attribute data includes an identifier, a type, and a status of each UI node on the UI page. The status data includes a UI control status such as a character, a picture, a media, a rendered image or a drawing instruction/task corresponding to a non-standard component, a character attribute, a cursor location, a sliding location, text, a color, a control size, and an animation. The source device may further generate and record an SFID of each UI node.

Step 1105: The source device performs serialization processing on to-be-sent data (including the UI structure and the UI attribute data that are of the to-be-projected page), to obtain serialized page data. The serialization processing may refer to assembling (or encoding) the to-be-sent data into a character string or a binary buffer or file.

Step 1106: The source device sends a page reconstruction message to a destination device, where the page reconstruction message carries the serialized page data.

Step 1107: The destination device receives and parses the page reconstruction message of the source device to obtain the serialized page data.

Step 1108: The destination device performs deserialization on the serialized page data to obtain the UI structure and the UI attribute data that are of the current page.

Step 1109: The destination device reconstructs, based on the system UI framework, the UI structure of the page based on the UI structure of the current page or according to the UI creation instruction, and generates a DPID of the page. In a possible implementation, the destination device records <SPID, DPID> in a page mapping table.

Step 1110: The destination device sets an attribute of each UI node on the current page based on the UI attribute data of the current page, including creating or configuring a UI node type, and setting the UI attribute data on the UI node. For the non-standard component, the destination device may draw a corresponding UI node according to a drawing instruction corresponding to the non-standard component, or set a corresponding rendered image, control size, animation, or the like on a corresponding UI node. The destination device may further generate and record a DFID of each UI node. In a possible implementation, the destination device records <SFID, DFID> in the node mapping table.

Step 1111: The destination device refreshes the displayed page, that is, renders the displayed page, for example, displays the page via a UI display module. The destination device may dynamically set a size of a display window, and the page can adapt to the size of the window when the page is displayed in the display window.

It should be noted that, if a projection mode of a projected first page of the first application is a UI data stream mode or a hybrid mode, the source device has sent an application resource of the first application to the destination device before projecting a second page. In this case, in a projection process after the first page, the application resource of the first application does not need to be repeatedly sent to the destination device. The embodiment in FIG. 11 shows a projection process of a page after the first page.

In this embodiment of this application, after the projection ends, for example, after a projection connection between the source device and the destination device is disconnected, the destination device may choose to delete a part or all of received data. For example, the destination device releases the UI display module. In other words, after the projection ends, the source device may reclaim or manage a peer resource. In a possible implementation, the destination device determines, based on a security level and/or a user setting, whether to delete the received data.

For example, after the projection connection is established between the source device and the destination device, the source device displays a first prompt message. The first prompt message indicates a user to choose whether to trust the destination device. If the user chooses to trust the destination device by operating the source device, the destination device does not delete the received data after the projection ends. If the user chooses not to trust the destination device by operating the source device, the destination device deletes the received data after the projection ends. Alternatively, after the projection ends, the source device displays a second prompt message. The second prompt message indicates whether the user chooses to delete the data received by the destination device. If the user chooses to delete the data received by the destination device by operating the source device, the destination device deletes the received data after the projection ends. If the user chooses not to delete the data received by the destination device by operating the source device, the destination device does not delete the received data after the projection ends.

FIG. 12A and FIG. 12B are a diagram of core steps of a projection method according to an embodiment of this application. FIG. 12A and FIG. 12B are a diagram obtained by combining this solution with the software and hardware architecture of the electronic device shown in FIG. 4. Refer to FIG. 12A and FIG. 12B. In an implementation of the projection method, a source device and a destination device each include the following five steps: negotiation of a current projection mode by exchanging software and hardware capabilities, operating systems, and UI framework versions; synchronization of application resources and configuration data; construction and synchronization of UI structures; updates of UI nodes/synchronization of events; and disconnection of a projection connection, and reclaiming or management of a destination-end resource. The first step and the fifth step may be implemented via service management modules at both ends, and the second step to the fourth step may be implemented via UI frameworks (including UI proxy modules) and network synchronization modules at both ends.

To verify performance of the UI data stream mode provided in embodiments of this application, a comparison test is performed on the UI data stream mode and a related technology in the open-source OpenHarmony system and ArkUI framework. Table 1 shows the test results.

**Table 1**

| Indicator | Related technology | UI data stream mode (this solution) |
|---|---|---|
| Amount of data transmitted over a network | About 1 MB/s to 2 MB/s for a mirroring mode | Page reconstruction: about 10 |
| | | KB/page to 100 KB/page |
| | | Page update: basically<1 KB/page |
| Reverse control delay | About 110 ms to 120 ms (office collaboration) | About 60 ms to 80 ms |
| Source-end power consumption | About 110 mA (shopping and office) to 220 mA (video) | About 30 mA to 70 mA |
| Image quality | In the mirroring mode, a destination device cannot adapt to a resolution, causing frame freezing or artifacts | Native 2K, 60 Hz, and no frame freezing or artifacts |

The test indicators include the amount of the data transmitted over the network, the reverse control delay, the source-end power consumption, and the image quality. In the mirroring mode in the related technology, a video stream (also referred to as a media stream) needs to be transmitted through video encoding. I frames and P frames indicate key frames and non-key frames in video encoding respectively. Each I frame is about 50 kilobytes to 100 kilobytes (KB), and each P frame is about 10 KB to 20 KB. If a quantity of I frames and P frames that can be transmitted per second in the mirroring mode is used for calculation, the amount of the data transmitted over the network is about 1 megabyte per second to 2 megabytes per second (MB/s). However, in the UI data stream mode in this solution, when a UI is reconstructed, the amount of the data transmitted over the network is about 10 KB/page to 100 KB/page, and when a page is updated, the amount of the data transmitted over the network is basically less than 1 KB/page. In addition, in the mirroring mode, each frame of picture needs to be transmitted when a picture changes. In the UI data stream mode, data is transmitted only when UI attribute data of the page is updated or the page is switched. For example, if a page includes a dynamic picture, and a picture of the page keeps changing due to the dynamic picture, each frame of picture needs to be transmitted in the mirroring mode. In the UI data stream mode, UI attribute data of the dynamic picture needs to be transmitted through a UI data stream only after a UI node of the dynamic picture is created for an initial time, and UI-related data of the dynamic picture does not need to be transmitted subsequently. It can be seen that, in comparison with the mirroring mode, the amount of the data transmitted over the network in the UI data stream mode is greatly reduced.

The reverse control delay refers to time from a destination-end user operation to a page update of the destination device. In the related technology, the reverse control delay in the office collaboration application scenario is about 110 milliseconds to 120 milliseconds (ms), and the reverse control delay in the UI data stream mode in this solution is about 60 ms to 80 ms. In other words, the reverse control delay in this solution is short, and a response speed of the destination device is fast, thereby reducing the frame freezing.

The source-end power consumption refers to power consumption of the source device. In the related technology, the source-end power consumption is about 110 milliamperes (mA) in the shopping and office application scenario, and the source-end power consumption is about 220 mA in the video application scenario. That is, the source-end power consumption in the related technology is about 110 mA to 220 mA. In this solution, the source-end power consumption in the UI data stream mode is about 30 mA to 70 mA.

When a screen resolution of the source device is 2K and a refresh rate is 60 hertz (Hz), in the related technology, the destination device cannot adapt to the resolution in the mirroring mode, causing the frame freezing or artifacts. However, this solution can implement the native 2K resolution and the 60 Hz refresh rate on the destination device through screen resolution adaptation, and no frame freezing or artifacts occur.

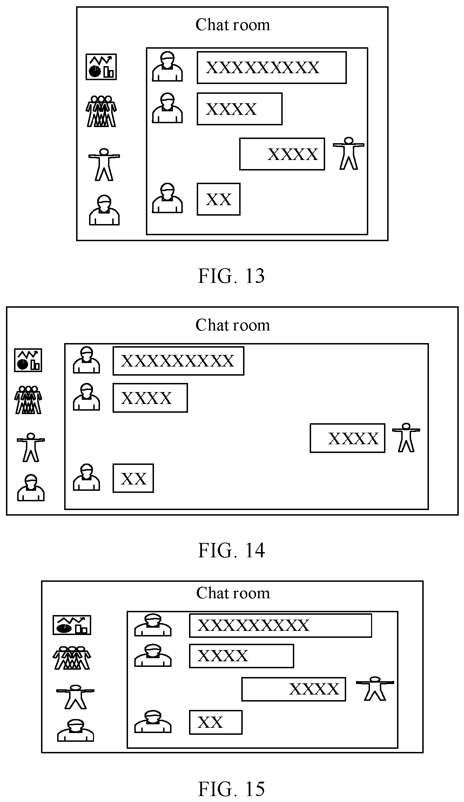

FIG. 13 is a diagram of a projection area on a source device according to an embodiment of this application. FIG. 14 is a diagram of projection effect on a destination device in this solution according to an embodiment of this application. FIG. 15 is a diagram of projection effect of a mirroring mode on a destination device in a related technology according to an embodiment of this application. It can be obviously seen from FIG. 13 to FIG. 15 that, in this solution, a picture after projection is not stretched, but in a related technology, a picture after projection is stretched. This is because in this solution, the destination device arranges, renders, and displays each UI node in the display picture in a UI reconstruction manner, and the reconstructed UI node adapts to a screen resolution of the destination device.

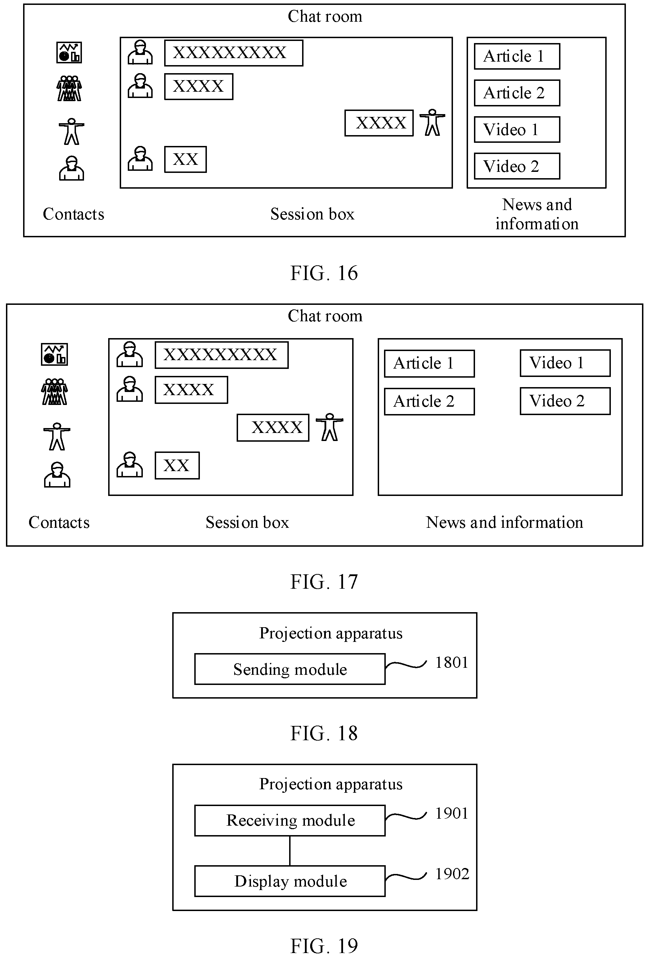

FIG. 16 is a diagram of another projection area on a source device in this solution according to an embodiment of this application. FIG. 17 is a diagram of a projection area of a destination device corresponding to FIG. 16 in this solution according to an embodiment of this application. It can be seen from FIG. 16 and FIG. 17 that, in this solution, the source device and the destination device may be different in a layout of a plurality of UI nodes. In other words, the destination device can adaptively adjust the layout of the plurality of UI nodes based on information such as a screen resolution. For example, some UI nodes are displayed in different locations on the source device and the destination device. For example, the UI nodes are displayed in the middle of the source device, and are displayed on the right of the destination device.

In conclusion, in this embodiment of this application, the source device sends a UI structure and UI attribute data of the projection area to the destination device. In this way, the destination device can construct, reconstruct, render, and display the corresponding projection area based on the UI structure and the UI attribute data at a UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

FIG. 18 is a diagram of a structure of a projection apparatus according to an embodiment of this application. The projection apparatus may be implemented by software, hardware, or a combination of software and hardware to become a part or an entirety of an electronic device. The electronic device may be the electronic device shown in FIG. 5. In this embodiment of this application, the projection apparatus is included in a source device. Refer to FIG. 18. The apparatus includes a sending module 1801.

The sending module 1801 is configured to send a user interface UI structure and UI attribute data of a first projection area to a destination device, to project the first projection area onto the destination device.

The UI structure indicates a layout relationship between a plurality of UI nodes in the first projection area, the UI attribute data indicates a rendering-related attribute of each of the plurality of UI nodes, and the UI structure and the UI attribute data are used to display the first projection area on the destination device.

In a possible implementation, the apparatus further includes:
a construction module, configured to: according to an application instruction, construct the UI structure based on a UI framework of the source device, and generate the UI attribute data.

In a possible implementation, the plurality of UI nodes include a first UI node corresponding to a first source-end component, the first source-end component belongs to a first-type component, and a corresponding image is drawn for the first-type component based on a non-UI framework.

The UI attribute data includes a drawing instruction of the first source-end component, and the drawing instruction of the first source-end component is used to draw an unrendered image of the first source-end component based on the non-UI framework; or the UI attribute data includes a rendered image of the first source-end component.

In a possible implementation, the plurality of UI nodes include a second UI node corresponding to a second source-end component, the second source-end component belongs to a second-type component, and a corresponding image is drawn for the second-type component based on the UI framework.

The UI attribute data includes drawing attribute data of the second source-end component, and the drawing attribute data of the second source-end component is used to draw a corresponding image of the second source-end component based on the UI framework.

In a possible implementation, the source device runs a first application, and the first projection area is a projection area of the first application. The sending module 1801 is further configured to:
send an application resource of the first application to the destination device. The application resource includes a resource required for rendering the plurality of UI nodes, and the application resource and the UI attribute data are jointly used by the destination device to reconstruct, render, and display the first projection area.

In a possible implementation, the apparatus further includes:
a receiving module, configured to receive first manipulation information sent by the destination device, where the first manipulation information indicates a first operation performed by a destination-end user on the first projection area; and
an update module, configured to: perform a second operation on the first projection area based on the first manipulation information, and update the UI structure and/or the UI attribute data that are/is of the first projection area.

The sending module 1801 is further configured to send UI update data of the first projection area to the destination device. The UI update data is used by the destination device to update the first projection area based on a UI framework of the destination device.

In a possible implementation, the UI attribute data includes identifiers of the plurality of UI nodes, the first manipulation information includes an identifier of a third UI node and a manipulation instruction corresponding to the first operation, the manipulation instruction instructs the second operation, and the third UI node is one of the plurality of UI nodes.

The update module is specifically configured to: perform the second operation on the third UI node based on the identifier of the third UI node and the manipulation instruction.

In a possible implementation, the UI attribute data includes identifiers of the plurality of UI nodes, the first manipulation information includes an identifier of a fourth UI node and operation information of the first operation, and the fourth UI node is one of the plurality of UI nodes.

The update module is specifically configured to:
parse the operation information of the first operation to determine the second operation; and
perform the second operation on the fourth UI node based on the identifier of the fourth UI node.

In a possible implementation, the source device runs the first application, and the first projection area is a projection area on a first page of the first application. The sending module 1801 is further configured to:
when the first application is switched from the first page to a second page, send a UI structure and UI attribute data of a second projection area to the destination device, to project the second projection area onto the destination device. The second projection area is a projection area on the second page.

In a possible implementation, the source device supports a plurality of projection modes. The apparatus further includes:
a display module, configured to display a current projection mode. The current projection mode is one of the plurality of projection modes.

In a possible implementation, the source device supports a plurality of projection modes, and projection modes of different projection areas are different. The apparatus further includes:
a determining module, configured to determine a projection mode of the first projection area from the plurality of projection modes according to a mode adaptation algorithm.

In this embodiment of this application, the source device sends the UI structure and the UI attribute data of the projection area to the destination device. In this way, the destination device can construct, reconstruct, render, and display the corresponding projection area based on the UI structure and the UI attribute data at a UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

It should be noted that when the projection apparatus provided in the foregoing embodiment performs projection, division of the foregoing function modules is merely used as an example for description. During actual application, the functions may be allocated to different function modules for implementation as required. To be specific, an internal structure of the apparatus is divided into different function modules to implement a part or all of the functions described above. In addition, the projection apparatus provided in the foregoing embodiment and the projection method embodiments belong to a same concept. For a specific implementation process of the apparatus, refer to the method embodiments. Details are not described herein again.

FIG. 19 is a diagram of a structure of another projection apparatus according to an embodiment of this application. The projection apparatus may be implemented by software, hardware, or a combination of software and hardware to become a part or an entirety of an electronic device. The electronic device may be the electronic device shown in FIG. 5. In this embodiment of this application, the apparatus is included in a destination device. Refer to FIG. 19. The apparatus includes a receiving module 1901 and a display module 1902.
a receiving module 1901, configured to receive a user interface UI structure and UI attribute data of a first projection area that are sent by a source device, where the UI structure indicates a layout relationship between a plurality of UI nodes in the first projection area, and the UI attribute data indicates a rendering-related attribute of each of the plurality of UI nodes; and
a display module 1902, configured to display the first projection area based on the UI structure and the UI attribute data.

In a possible implementation, the display module 1902 is specifically configured to:
load the UI structure based on a UI framework of the destination device to arrange the plurality of UI nodes in the first display area; and
set an attribute of each of the plurality of UI nodes based on the UI attribute data to reconstruct, render, and display the first projection area.

In a possible implementation, the plurality of UI nodes include a first UI node corresponding to a first source-end component, the first source-end component belongs to a first-type component, and a corresponding image is drawn for the first-type component based on a non-UI framework.

The UI attribute data includes a drawing instruction of the first source-end component, and the drawing instruction of the first source-end component is used to draw an unrendered image of the first source-end component based on the non-UI framework; or the UI attribute data includes a rendered image of the first source-end component.

In a possible implementation, when the UI attribute data includes the drawing instruction of the first source-end component, the display module 1902 is specifically configured to:
load the UI structure based on the UI framework to create a first destination-end component, to obtain the first UI node; and
draw an image of the first destination-end component according to the drawing instruction of the first source-end component and the non-UI framework, to obtain an unrendered image of the first UI node.

In a possible implementation, when the UI attribute data includes the rendered image of the first source-end component, the display module 1902 is specifically configured to:
load the UI structure based on the UI framework to create a second destination-end component, to obtain the first UI node, where the second destination-end component is different from the first source-end component; and
enable, based on the rendered image of the first source-end component and by setting a UI attribute of the second destination-end component, the first UI node to carry the rendered image of the first source-end component.

In a possible implementation, the plurality of UI nodes include a second UI node corresponding to a second source-end component, the second source-end component belongs to a second-type component, a corresponding image is drawn for the second-type component based on the UI framework, and the UI attribute data includes drawing attribute data of the second source-end component.

The display module 1902 is specifically configured to:
load the UI structure based on the UI framework to create a third destination-end component, to obtain the second UI node, where the third destination-end component is the same as the second source-end component; and
set an attribute of the second source-end component based on the drawing attribute data of the second source-end component and the UI framework, to draw a corresponding image of the second UI node.

In a possible implementation, the apparatus further includes:
a sending module, configured to send first manipulation information to the source device in response to a first operation performed by a destination-end user on the first projection area, where the first manipulation information indicates the source device to perform a second operation on the first projection area, and update the UI structure and/or the UI attribute data that are/is of the first projection area, where
the receiving module 1901 is further configured to receive UI update data of the first projection area that is sent by the source device; and
an update module, configured to update the first projection area based on the UI update data of the first projection area.

In a possible implementation, the source device supports a plurality of projection modes, and projection modes of different projection areas are different. The apparatus further includes:
the sending module, configured to send real-time computing capability information of the destination device to the source device. The real-time computing capability information is used by the source device to determine a projection mode of a current projection area from the plurality of projection modes according to a mode adaptation algorithm.

In this embodiment of this application, the source device sends the UI structure and the UI attribute data of the projection area to the destination device. In this way, the destination device can construct, reconstruct, render, and display the corresponding projection area based on the UI structure and the UI attribute data at a UI layer. In this solution, the source device does not need to perform video encoding and transmission after rendering an image, thereby reducing power consumption of the source device. The source device does not need to send user-related data to the destination device, thereby reducing a risk of leakage of user privacy data. In addition, in this solution, projection can also be implemented when no application that needs to be projected is installed on the destination device, thereby supporting multi-device collaboration. In addition, the destination device renders and displays the projection area, to adapt to a screen resolution of the destination device, thereby improving display effect.

It should be noted that when the projection apparatus provided in the foregoing embodiment performs projection, division of the foregoing function modules is merely used as an example for description. During actual application, the functions may be allocated to different function modules for implementation as required. To be specific, an internal structure of the apparatus is divided into different function modules to implement a part or all of the functions described above. In addition, the projection apparatus provided in the foregoing embodiment and the projection method embodiments belong to a same concept. For a specific implementation process of the apparatus, refer to the method embodiments. Details are not described herein again.

Apart or all of the foregoing embodiments may be implemented by software, hardware, firmware, or any combination thereof. When the software is used to implement embodiments, a part or all of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like. It should be noted that, the computer-readable storage medium mentioned in embodiments of this application may be a nonvolatile storage medium, that is, may be a non-transitory storage medium.

It should be understood that "at least one" mentioned in this specification refers to one or more, and "a plurality of" refers to two or more. In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A projection system, wherein the system comprises a source-end projection module and a destination-end projection module;
the source-end projection module is configured to send a user interface UI structure and UI attribute data of a first projection area to the destination-end projection module, to project the first projection area from a source device on which the source-end projection module is located onto a destination device on which the destination-end projection module is located, wherein the UI structure indicates a layout relationship between a plurality of UI nodes in the first projection area, and the UI attribute data indicates a rendering-related attribute of each of the plurality of UI nodes; and
the destination-end projection module is configured to: receive the UI structure and the UI attribute data, and display the first projection area on the destination device based on the UI structure and the UI attribute data.

2. The system according to claim 1, wherein the destination-end projection module is specifically configured to:
load the UI structure based on a UI framework of the destination device to arrange the plurality of UI nodes in the first display area, and set an attribute of each of the plurality of UI nodes based on the UI attribute data to reconstruct, render, and display the first projection area.

3. The system according to claim 1 or 2, wherein
the source-end projection module is further configured to: according to an application instruction, construct the UI structure based on a UI framework of the source device, and generate the UI attribute data.

4. The system according to any one of claims 1 to 3, wherein the destination-end projection module is further configured to send first manipulation information to the source-end projection module, to update a part or all of the UI nodes in the first projection area in a manner of reversely controlling the source device.

5. The system according to any one of claims 1 to 4, wherein the source device runs a first application, and the first projection area is a projection area of the first application.

6. The system according to claim 5, wherein the first application is not installed on the destination device.

7. The system according to any one of claims 1 to 6, wherein the first projection area is a partial or entire area on a first page.

8. A projection method, applied to a source device, wherein the method comprises:
sending a user interface UI structure and UI attribute data of a first projection area to a destination device, to project the first projection area onto the destination device, wherein
the UI structure indicates a layout relationship between a plurality of UI nodes in the first projection area, the UI attribute data indicates a rendering-related attribute of each of the plurality of UI nodes, and the UI structure and the UI attribute data are used to display the first projection area on the destination device.

9. The method according to claim 8, wherein before sending the UI structure and the UI attribute data that are of the first projection area to the destination device, the method further comprises:
according to an application instruction, constructing the UI structure based on a UI framework of the source device, and generating the UI attribute data.

10. The method according to claim 8 or 9, wherein the plurality of UI nodes comprise a first UI node corresponding to a first source-end component, the first source-end component belongs to a first-type component, and a corresponding image is drawn for the first-type component based on a non-UI framework; and
the UI attribute data comprises a drawing instruction of the first source-end component, and the drawing instruction of the first source-end component is used to draw an unrendered image of the first source-end component based on the non-UI framework; or
the UI attribute data comprises a rendered image of the first source-end component.

11. The method according to any one of claims 8 to 10, wherein the plurality of UI nodes comprise a second UI node corresponding to a second source-end component, the second source-end component belongs to a second-type component, and a corresponding image is drawn for the second-type component based on the UI framework; and
the UI attribute data comprises drawing attribute data of the second source-end component, and the drawing attribute data of the second source-end component is used to draw a corresponding image of the second source-end component based on the UI framework.

12. The method according to any one of claims 8 to 11, wherein the source device runs a first application, the first projection area is a projection area of the first application, and the method further comprises:
sending an application resource of the first application to the destination device, wherein the application resource comprises a resource required for rendering the plurality of UI nodes, and the application resource and the UI attribute data are jointly used by the destination device to reconstruct, render, and display the first projection area.

13. The method according to any one of claims 8 to 12, wherein the method further comprises:
receiving first manipulation information sent by the destination device, wherein the first manipulation information indicates a first operation performed by a destination-end user on the first projection area;
performing a second operation on the first projection area based on the first manipulation information, and updating the UI structure and/or the UI attribute data that are/is of the first projection area; and
sending UI update data of the first projection area to the destination device, wherein the UI update data is used by the destination device to update the first projection area based on a UI framework of the destination device.

14. The method according to claim 13, wherein the UI attribute data comprises identifiers of the plurality of UI nodes, the first manipulation information comprises an identifier of a third UI node and a manipulation instruction corresponding to the first operation, the manipulation instruction instructs the second operation, and the third UI node is one of the plurality of UI nodes; and
performing the second operation on the first projection area based on the first manipulation information comprises:
performing the second operation on the third UI node based on the identifier of the third UI node and the manipulation instruction.

15. The method according to claim 13, wherein the UI attribute data comprises identifiers of the plurality of UI nodes, the first manipulation information comprises an identifier of a fourth UI node and operation information of the first operation, and the fourth UI node is one of the plurality of UI nodes; and
performing the second operation on the first projection area based on the first manipulation information comprises:
parsing the operation information of the first operation to determine the second operation; and
performing the second operation on the fourth UI node based on the identifier of the fourth UI node.

16. The method according to any one of claims 8 to 15, wherein the source device runs the first application, the first projection area is a projection area on a first page of the first application, and the method further comprises:
when the first application is switched from the first page to a second page, sending a UI structure and UI attribute data of a second projection area to the destination device, to project the second projection area onto the destination device, wherein the second projection area is a projection area on the second page.

17. The method according to any one of claims 8 to 16, wherein the source device supports a plurality of projection modes, and the method further comprises:
displaying a current projection mode, wherein the current projection mode is one of the plurality of projection modes.

18. The method according to any one of claims 8 to 17, wherein the source device supports the plurality of projection modes, projection modes of different projection areas are different, and before sending the user interface UI structure and the UI attribute data that are of the first projection area to the destination device, the method further comprises:
determining a projection mode of the first projection area from the plurality of projection modes according to a mode adaptation algorithm.

19. A projection method, applied to a destination device, wherein the method comprises:
receiving a user interface UI structure and UI attribute data of a first projection area that are sent by a source device, wherein the UI structure indicates a layout relationship between a plurality of UI nodes in the first projection area, and the UI attribute data indicates a rendering-related attribute of each of the plurality of UI nodes; and
displaying the first projection area based on the UI structure and the UI attribute data.

20. The method according to claim 19, wherein displaying the first projection area based on the UI structure and the UI attribute data comprises:
loading the UI structure based on a UI framework of the destination device to arrange the plurality of UI nodes in the first display area; and
setting an attribute of each of the plurality of UI nodes based on the UI attribute data to reconstruct, render, and display the first projection area.

21. The method according to claim 19 or 20, wherein the plurality of UI nodes comprise a first UI node corresponding to a first source-end component, the first source-end component belongs to a first-type component, and a corresponding image is drawn for the first-type component based on a non-UI framework; and
the UI attribute data comprises a drawing instruction of the first source-end component, and the drawing instruction of the first source-end component is used to draw an unrendered image of the first source-end component based on the non-UI framework; or
the UI attribute data comprises a rendered image of the first source-end component.

22. The method according to claim 21, wherein when the UI attribute data comprises the drawing instruction of the first source-end component, loading the UI structure based on the UI framework of the destination device to arrange the first UI node in the first display area comprises:
loading the UI structure based on the UI framework to create a first destination-end component, to obtain the first UI node; and
setting the attribute of the first UI node based on the UI attribute data comprises:
drawing an image of the first destination-end component according to the drawing instruction of the first source-end component and the non-UI framework, to obtain an unrendered image of the first UI node.

23. The method according to claim 19 or 20, wherein when the UI attribute data comprises the rendered image of the first source-end component, loading the UI structure based on the UI framework of the destination device to arrange the first UI node in the first display area comprises:
loading the UI structure based on the UI framework to create a second destination-end component, to obtain the first UI node, wherein the second destination-end component is different from the first source-end component; and
setting the attribute of the first UI node based on the UI attribute data comprises:
enabling, based on the rendered image of the first source-end component and by setting a UI attribute of the second destination-end component, the first UI node to carry the rendered image of the first source-end component.

24. The method according to any one of claims 19 to 23, wherein the plurality of UI nodes comprise a second UI node corresponding to a second source-end component, the second source-end component belongs to a second-type component, a corresponding image is drawn for the second-type component based on the UI framework, and the UI attribute data comprises drawing attribute data of the second source-end component;
loading the UI structure based on the UI framework of the destination device to arrange the second UI node in the first display area comprises:
loading the UI structure based on the UI framework to create a third destination-end component, to obtain the second UI node, wherein the third destination-end component is the same as the second source-end component; and
setting the attribute of the second UI node based on the UI attribute data comprises:
setting an attribute of the second source-end component based on the drawing attribute data of the second source-end component and the UI framework, to draw a corresponding image of the second UI node.

25. The method according to any one of claims 19 to 24, wherein the method further comprises:
sending first manipulation information to the source device in response to a first operation performed by a destination-end user on the first projection area, wherein the first manipulation information indicates the source device to perform a second operation on the first projection area, and update the UI structure and/or the UI attribute data that are/is of the first projection area;
receiving UI update data of the first projection area that is sent by the source device; and
updating the first projection area based on the UI update data of the first projection area.

26. The method according to any one of claims 19 to 25, wherein the source device supports a plurality of projection modes, projection modes of different projection areas are different, and the method further comprises:
sending real-time computing capability information of the destination device to the source device, wherein the real-time computing capability information is used by the source device to determine a projection mode of a current projection area from the plurality of projection modes according to a mode adaptation algorithm.

27. A projection apparatus, comprised in a source device, wherein the apparatus comprises:
a sending module, configured to send a user interface UI structure and UI attribute data of a first projection area to a destination device, to project the first projection area onto the destination device, wherein
the UI structure indicates a layout relationship between a plurality of UI nodes in the first projection area, the UI attribute data indicates a rendering-related attribute of each of the plurality of UI nodes, and the UI structure and the UI attribute data are used to display the first projection area on the destination device.

28. A projection apparatus, comprised in a destination device, wherein the apparatus comprises:
a receiving module, configured to receive a user interface UI structure and UI attribute data of a first projection area that are sent by a source device, wherein the UI structure indicates a layout relationship between a plurality of UI nodes in the first projection area, and the UI attribute data indicates a rendering-related attribute of each of the plurality of UI nodes; and
a display module, configured to display the first projection area based on the UI structure and the UI attribute data.

29. A computer-readable storage medium, wherein the storage medium stores a computer program, and when the computer program is executed by a processor, steps of the method according to any one of claims 1 to 18 are implemented, or steps of the method according to any one of claims 19 to 26 are implemented.

30. A computer program product, wherein the computer program product stores computer instructions, and when the computer instructions are executed by a processor, steps of the method according to any one of claims 1 to 18 are implemented, or steps of the method according to any one of claims 19 to 26 are implemented.
